(19)

**Europäisches Patentamt**
**European Patent Office**
**Office européen des brevets**

(11)  **EP 4 556 953 B1**

(12)  **EUROPEAN PATENT SPECIFICATION**

(45) Date of publication and mention
of the grant of the patent:
**25.03.2026  Bulletin 2026/13**

(21) Application number: **24204698.5**

(22) Date of filing: **04.10.2024**

(51) International Patent Classification (IPC):
*G01S 13/60* (2006.01)    *G01S 13/86* (2006.01)
*G01S 13/931* (2020.01)   *B60W 40/072* (2012.01)
*B60W 40/076* (2012.01)   *G01S 7/295* (2006.01)
*G01S 13/62* (2006.01)    *G01C 21/16* (2006.01)
*B60W 40/10* (2012.01)    *B60W 30/02* (2012.01)
*B60W 50/00* (2006.01)    *G01S 13/42* (2006.01)

(52) Cooperative Patent Classification (CPC):
**G01S 13/931; B60W 30/02; B60W 40/10;
B60W 50/0097; G01C 21/16; G01S 7/295;
G01S 13/42; G01S 13/60; G01S 13/62;
G01S 13/86; B60W 2300/12; B60W 2556/35;
B60W 2710/207; B60W 2720/26; B60W 2720/28;**
(Cont.)

(54) **SENSOR DEVICE FOR A VEHICLE**

SENSORVORRICHTUNG FÜR EIN FAHRZEUG

DISPOSITIF DE DÉTECTION POUR UN VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.11.2023  EP 23210219**

(43) Date of publication of application:
**21.05.2025  Bulletin 2025/21**

(73) Proprietor: **VOLVO TRUCK CORPORATION
405 08 Göteborg (SE)**

(72) Inventors:
• **JONASSON, Mats
  PARTILLE (SE)**
• **RYDSTRÖM, Mats
  BILLDAL (SE)**

(74) Representative: **Ström & Gulliksson AB
P.O. Box 4188
203 13 Malmö (SE)**

(56) References cited:
**WO-A1-2023/169681    US-B1- 10 386 461**

• **SCH�N STEFFEN ET AL: "Internialnavigation:
  Mathematische Grundlagen", 1 April 2017
  (2017-04-01), XP093149155, Retrieved from the
  Internet <URL:https://www.ife.uni-hannover.de/
  de/forschung/forschungsschwerpunkte/
  gnss-und-inertialnavigation> [retrieved on
  20170401]**
• **JOHN: "Least squares | overdetermined &
  underdetermined systems", 6 May 2018
  (2018-05-06), XP093244573, Retrieved from the
  Internet <URL:https://www.johndcook.com/blog/
  2018/05/06/least-squares/> [retrieved on
  20250129]**
• **KUNYU HE: "SVD in Machine Learning:
  Underdetermined Least Squares | by Kunyu He |
  Towards Data Science", 31 December 2019
  (2019-12-31), XP093244572, Retrieved from the
  Internet <URL:https://towardsdatascience.com/
  underdetermined-least-squares-feea1ac16a9>
  [retrieved on 20250129]**

(52) Cooperative Patent Classification (CPC): (Cont.)
B60W 2720/30; G01C 21/1652

## Description

### TECHNICAL FIELD

The disclosure relates generally to motion estimation for vehicles. In particular aspects, the disclosure relates to a sensor device which is suitable for motion estimation for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

For many vehicle control approaches (e.g., vehicle motion management) it is beneficial to have an estimation of the vehicle motion, which should preferably be as accurate as possible.

For example, many modern vehicles comprise advanced motion control systems, such as advanced driver assistance systems (ADAS) and various levels of autonomous driving (AD) functionality, and other safety-enhancing functions such as emergency braking and traction control that provide automated or at least semi-automated control of vehicle motion control actuators, e.g., propulsion devices, brakes, and steering actuators. This type of automated actuator control on a vehicle requires accurate and reliable information about the current motion of the vehicle, since otherwise it cannot be determined if the vehicle moves in a desired manner or not, i.e., if actuator intervention is required. Fully autonomous vehicles place even higher requirements on the availability of accurate and reliable motion information. Thus, such motion control systems rely on accurate information about the current motion of the vehicle, and also the future motion of the vehicle over some time window. Vehicle motion estimation and motion prediction are therefore important components in modern vehicle control systems.

Some vehicle motion estimation techniques based on the output of wheel speed sensors and inertial measurement units (IMUs) are known. Advanced motion estimation techniques also rely on models of vehicle dynamics to estimate current vehicle motion and also to predict future vehicle motion.

US 2004/0138802 A1 discusses use of radar techniques for determining vehicle speed over ground. This technique provides accurate information about the motion of the vehicle relative to the ground surface.

WO2023169746 A1 also discusses use of radar techniques for determining vehicle speed over ground based on a radar transceiver system comprising radar transceivers directed at the surface supporting the vehicle.

WO 2023/169681 A1 describes a sensor system for determining vehicle speed over ground.

US 10,386,461 B1 mentions that an inertial measurement unit may be used to align a plurality of radar units coupled to a vehicle.

However, despite the available techniques for determining vehicle motion, there is a continuing need for improved, more versatile, and more accurate methods for vehicle motion estimation and vehicle motion prediction, as well as for vehicle motion control.

Therefore, there is a need for improved approaches to motion estimation for a vehicle.

### SUMMARY

According to a first aspect of the disclosure, a sensor device according to claim 1 is provided.

The first aspect of the disclosure may seek to improve motion estimation for a vehicle. A technical benefit may include that motion estimation may be accurately performed due to the use of two different types of measurement data, which are collected in a same reference frame (i.e., movements of the advanced antenna array radar transceiver and the IMU are synchronized).

Optionally in some examples, including in at least one preferred example, parameters of the orientation of the sensor device relative the inertial reference frame may comprise one or more Euler angle(s) $(\theta_x, \theta_y, \theta_z)$. A technical benefit may include that vehicle orientation relative the inertial reference frame may be estimated as part of the motion estimation.

Optionally in some examples, including in at least one preferred example, the IMU data may comprise at least a longitudinal acceleration $(a_x)$, a lateral acceleration $(a_y)$, and a yaw angular speed $(\omega_z)$. A technical benefit may include that vehicle movement relative the inertial reference frame may be provided for estimation of one or more Euler angle(s).

Optionally in some examples, including in at least one preferred example, the advanced antenna array may be configured to illuminate different parts of the external surface to measure radial velocity and distance to the external surface in several different azimuth and elevation angles relative the external surface. A technical benefit may include that estimation of vehicle movement relative the external surface is enabled.

Optionally in some examples, including in at least one preferred example, the radar data may comprise at least a longitudinal speed $(v_x)$, a longitudinal acceleration $(\dot{v}_x)$, and a lateral acceleration $(\dot{v}_y)$. A technical benefit may include that vehicle movement relative the external surface may be provided for estimation of one or more Euler angle(s).

Optionally in some examples, including in at least one preferred example, the processing circuitry may be configured to determine the orientation of the sensor device based on an underdetermined system of equations, defining a relationship among parameters of the orientation, the IMU data, the radar data, and inertial gravity. A technical benefit may include convenient and accurate estimation of the orientation.

Optionally in some examples, including in at least one preferred example, the processing circuitry may be configured to determine the orientation of the sensor device as a least squares solution to the underdetermined system of equations. A technical benefit may include convenient and accurate estimation of the orientation.

Optionally in some examples, including in at least one preferred example, the processing circuitry may be configured to dynamically assign a respective weight to each equation of the underdetermined system of equations, the respective weight being based on a reliability of measurement data used by the equation. A technical benefit may include that measurements with relatively high uncertainty may be given relatively low influence, which may improve the accuracy.

Optionally in some examples, including in at least one preferred example, the processing circuitry may be further configured to acquire an orientation of the sensor device relative the external surface, and to determine an orientation of the external surface relative the inertial reference frame based on the orientation of the sensor device relative the external surface and the orientation of the sensor device relative the inertial reference frame. A technical benefit may include that ground surface orientation relative the inertial reference frame (e.g., bank angle and/or slope) may be estimated as part of the motion estimation.

According to a second aspect of the disclosure, a computer system according to claim 10 is provided

The second aspect of the disclosure may seek to improve motion estimation for a vehicle. A technical benefit may include that motion estimation may be accurately performed due to the use of two different types of measurement data, which are collected in a same reference frame (i.e., movements of the advanced antenna array radar transceiver and the IMU are synchronized).

According to a third aspect of the disclosure, a vehicle is provided, which comprises the sensor device of the first aspect and/or the computer system of the second aspect. The third aspect of the disclosure may seek to provide a vehicle with improved motion estimation. A technical benefit may include improved vehicle motion management, which in turn may entail (for example) one or more of: increased safety, smoother vehicle movement, lowered energy consumption, reduced wear, etc.

Optionally in some examples, including in at least one preferred example, the external surface may be a ground surface supporting the vehicle, and the orientation of the sensor device relative the inertial reference frame may indicates an orientation of the vehicle relative the inertial reference frame.

According to a fourth aspect of the disclosure, a computer-implemented method according to claim 13 is provided.

The fourth aspect of the disclosure may seek to improve motion estimation for a vehicle. A technical benefit may include that motion estimation may be accurately performed due to the use of two different types of measurement data, which are collected in a same reference frame (i.e., movements of the advanced antenna array radar transceiver and the IMU are synchronized).

According to a fifth aspect of the disclosure, a computer program product is provided, which comprises program code for performing, when executed by the processing circuitry, the method of the fourth aspect.

According to a sixth aspect of the disclosure, a non-transitory computer-readable storage medium is provided, which comprises instructions, which when executed by the processing circuitry, cause the processing circuitry to perform the method of the fourth aspect.

The fifth and sixth aspects of the disclosure may seek to convey program code for improved motion estimation for a vehicle. A technical benefit may include that new vehicles and/or legacy vehicles may be conveniently configured, by software installation/update, to acquire data of a sensor device comprising an advanced antenna array radar transceiver and an inertial measurement unit (IMU) wherein the acquired data comprises radar data indicating motion of the sensor device relative to an external surface in a reference frame of the sensor device and IMU data indicating motion of the sensor device in a reference frame of the sensor device, and to determine an orientation of the sensor device relative an inertial reference frame based on joint processing of the radar data and the IMU data subject to the advanced antenna array radar transceiver and the IMU being fixedly mounted relative each other.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

Figure 1 illustrates an exemplary vehicle according to some of the teachings herein.

Figure 2 schematically illustrates a vehicle with a plurality of ground radar sensors.

Figure 3 illustrates a vehicle pose relative to road surface and horizontal planes.

Figures 4A-C shows different reference frames for defining vehicle motion.

Figures 5-6 show two types of ground radar antenna arrangements.

Figure 7 illustrates a heavy-duty vehicle with an advanced ground radar system.

Figure 8 shows an overview of an example vehicle motion management system.

Figure 9 is a flow chart that illustrates exemplary methods.

Figure 10A is a schematic block diagram illustrating a sensor device according to some examples.

Figure 10B is a flowchart illustrating a method according to some examples.

Figure 11 is an exemplary illustration of a heavy-duty vehicle with a radar system.

Figures 12A-B show example vehicles and define some radar system parameters.

Figure 13 exemplifies a surface area illuminated by a radar transceiver.

Figure 14 shows a graph which illustrates range-Doppler relationships.

Figures 15A-B illustrate effect of pitch on a ground-speed radar transceiver.

Figures 16A-D and 17 show graphs that illustrate various range-Dopplerrelationships.

Figure 18 illustrates an example range-Doppler power spectrum.

Figure 19 shows an example heavy-duty vehicle with a radar transceiver system.

Figure 20 schematically illustrates a signal processing system.

Figure 21 is a flow chart illustrating methods.

Figure 22 is a schematic diagram of an exemplary computer system for implementing examples disclosed herein.

Figure 23 is a schematic drawing illustrating a computer program product, in the form of a non-transitory computer-readable storage medium, according to some examples.

Figure 24 is a schematic block diagram of a control unit according to some examples.

## DETAILED DESCRIPTION

The detailed description set forth below provides information and examples of the disclosed technology with sufficient detail to enable those skilled in the art to practice the disclosure.

As already mentioned, it may be beneficial to have an accurate estimation of vehicle motion for many vehicle control approaches (e.g., vehicle motion management). Some examples herein aim to provide suitable approaches to motion estimation for a vehicle.

According to some examples, approaches for multi-frame vehicle motion estimation using radar and IMU will be provided.

Generally, IMU data typically reflects a combined effect of gravity and change of speed as experienced by the IMU. Combining IMU data with radar data may enable the effects of gravity and change of speed in the IMU data to be distinguishable from each other. For example, an effect in the IMU data of change of speed relative to the ground surface may be identified based on the radar data. According to some examples, the identified effect of change of speed relative to the ground surface may be removed from the IMU data to identify the orientation of the ground surface relative to the horizontal plane.

According to some examples, there is presented a computer-implemented method and corresponding processing circuitry for controlling motion of a vehicle. The method comprises configuring a ground speed radar system arranged to measure motion of the vehicle relative to a ground surface supporting the vehicle in a ground surface reference frame (relative to the ground surface), and an IMU system arranged to measure motion of the vehicle in a vehicle reference frame, i.e., relative to the vehicle. The method also comprises obtaining radar data from the radar system and IMU data from the IMU system, determining motion by the vehicle in the ground surface reference frame based on the radar data, determining motion by the vehicle in the vehicle reference frame based on the IMU data, and identifying an orientation of the ground surface relative to a horizontal plane based on joint processing of the radar data and the IMU data. The method furthermore comprises controlling the motion of the vehicle based at least in part on the orientation of the ground surface relative to gravity. These examples may seek to control a vehicle more accurately by also accounting for the orientation of the ground surface supporting the vehicle relative to the horizontal plane or relative to some other gravity-related reference plane. This way road slope can be accounted for in the overall vehicle motion management, which is an advantage. The road slope also affects vehicle stability, hence the methods and control units disclosed may provide an increase in vehicle stability.

Some examples also relates to vehicle motion estimation, and in particular to a computer-implemented method for estimating an orientation of a ground surface and/or a vehicle supported thereon relative to a horizontal plane. The method comprises configuring a ground speed radar system arranged to measure motion of the vehicle relative to the ground surface supporting the vehicle in a ground surface reference frame, and an IMU system arranged to measure motion of the vehicle in a vehicle reference frame. As above, the method comprises obtaining radar data from the radar system and IMU data from the IMU system, determining motion by the vehicle in the ground surface reference frame based on the radar data, determining motion by the vehicle in the vehicle reference frame based on the IMU data, and identifying an orientation of the ground surface and/or the vehicle relative to the horizontal plane, based on joint processing of the radar data and on the IMU data. The method may comprise generating an output signal comprising the orientation of the ground surface and/or the vehicle relative to the horizontal plane.

According to some examples, the method comprises identifying an orientation change rate of the ground surface with respect to a driven distance, i.e., how fast the road slope is changing, based on joint processing of the radar data and the IMU data. This provides even more information about the characteristics of the ground surface, which information can be used to improve vehicle control. This can also be used to improve prediction of vehicle motion.

According to some examples, the method comprises controlling the motion of the vehicle based at least in part on the orientation change rate of the ground surface relative to gravity. The information on orientation rate change improves many aspects of vehicle control, in particular predictive motion control which control vehicle actuators to compensate for an upcoming change in driving conditions, such as an onset of a significant road slope. Traction control can also be improved by the herein disclosed methods, such as launch in difficult uphill road conditions.

According to some examples, the method comprises configuring the ground speed radar system with a plurality of radar transceivers arranged directed at the ground surface. The different radar transceivers are spatially separated and therefore observe different parts of the ground surface. This gives a more stable system with better output data. However, a single advanced antenna array radar transceiver can also be used with advantage, i.e., the method may comprise configuring at least one radar transceiver of the ground speed radar system with an antenna array. The antenna array can illuminate different parts of the road surface, i.e., measure radial velocity and distance to the road surface in several different azimuth and elevation angles, providing more data than a single transmission lobe radar transceiver is capable of.

According to some examples, the method comprises configuring at least one radar transceiver with a respective and co-located IMU. This way the IMU data and the radar data is obtained at the same place on the vehicle, i.e., at the same coordinates in the vehicle reference frame, avoiding the need for translation of the data to account for spatial separation between IMU and radar transceiver. It is an advantage that the coordinate translation is avoided since this can introduce errors from uncertainty in radar transceiver and IMU mounting.

According to some examples, the method comprises determining motion by the vehicle in the vehicle reference frame based on joint processing of the radar data and the IMU data. The joint processing may comprise processing by a common signal processing filter, i.e., sensor fusion. More simple analytical methods can also be applied, as well as more advanced methods, as will be explained in the following.

According to some examples, the method comprises determining motion by the vehicle in an Inertial reference frame based on joint processing of the radar data and the IMU data and/or determining motion by the vehicle in the ground surface reference frame based on joint processing of the radar data and the IMU data.

According to some examples, the method comprises determining motion by the vehicle based on joint processing of the radar data and the IMU data, and also on a model of vehicle dynamics associated with the vehicle. The model of vehicle dynamics may, e.g., comprise a bicycle model or more advanced vehicle dynamics models. The joint processing of the radar data and the IMU data can for instance be based on processing by a Kalman filter, an extended Kalman filter, or a Particle filter.

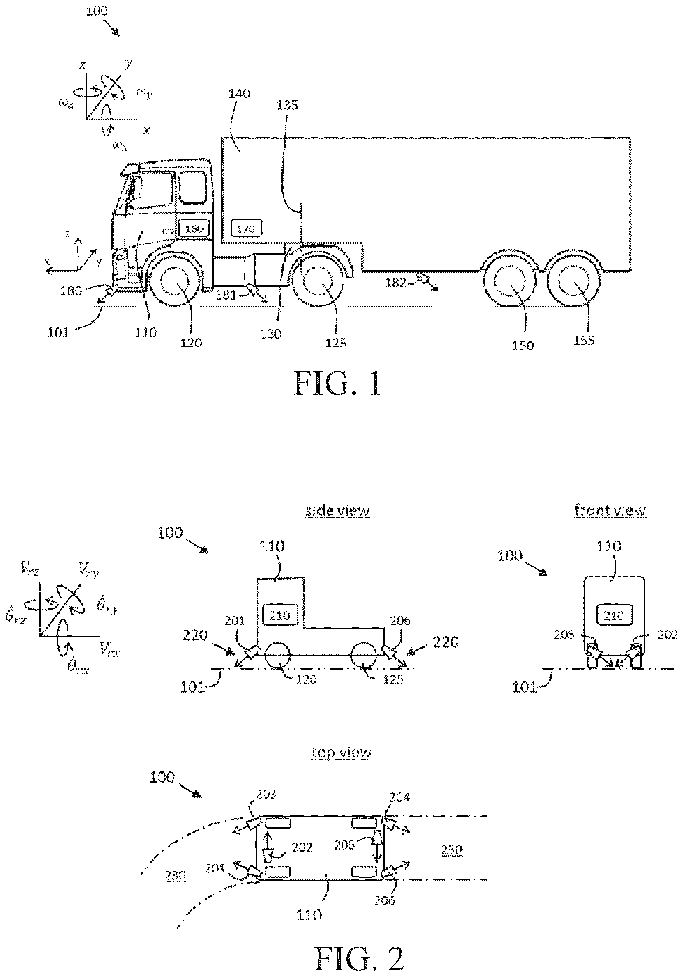

Figure 1 illustrates an example heavy-duty vehicle 100, here in the form of a semi-trailer vehicle with a tractor 110 arranged to tow a trailer 140. It is, however, appreciated that the methods and control units disclosed herein can be applied with advantage also in other types of heavy-duty vehicles, such as rigid trucks, other types of articulated vehicles, trucks with drawbar connections, construction equipment such as wheel loaders and articulated haulers, buses, and so on. The vehicle 100 may also comprise more than two vehicle units. A dolly vehicle unit may for instance be used to tow more than one trailer. Aspects of the disclosure are also applicable in passenger cars and in recreational vehicles.

The example vehicle 100 illustrated in Figure 1 comprises a tractor 110 with a front steered axle and a rear axle. The example tractor 110 illustrated in Figure 1 comprises a pair of front wheels 120 and a pair of rear wheels 125. The tractor 110 has a fifth wheel connection 130 to which the trailer 140 is connected, such that it can rotate about a coupling axis 135. The trailer 140 comprises two rear axles with wheels 150, 155. The tractor 110 and the trailer 140 are both supported on a ground surface 101. The ground surface 101 can be a paved road surface, a gravel road surface, a surface at a construction site, a surface at a quarry, a deposit ground, or the like.

It is appreciated that the ground surface 101 is not always perfectly planar, but often uneven to some degree. A paved road surface is normally more even than a gravel road with potholes, wheel tracks, and the like, and a quarry ground surface may be even less planar. Herein, when discussing the orientation of the ground surface 101 relative to the gravity vector or the Earth horizontal plane, it is assumed that the ground surface 101 approximately coincides with a plane that intersects the contact surfaces between the wheels of the vehicle 100 and the ground surface 101, at least approximately.

The gravity vector, as used herein, corresponds approximately to the perpendicular line of equipotential surface of gravity on Earth. It is understood that the Earth's equipotential surface of gravity is very complex, and the equipotential surface of reference ellipsoid model such as WGS-84, is used to approximate the Earth's equipotential surface of gravity. The gravity of Earth, denoted herein by g, is the net acceleration that is imparted to objects due to the combined effect of gravitation (from mass distribution within Earth) and the centrifugal force (from the Earth's rotation). In SI units this acceleration is expressed in meters per second squared ($m/s^2$) or equivalently in newtons per kilogram (N/kg). Near Earth's surface, the acceleration due to gravity, accurate to three significant figures, is 9.81 $m/s^2$. The gravity vector is approximately normal to the horizontal plane, at least in a local area.

The ground surface 101 may have an angle relative to the horizontal plane. In the case of a planar road surface, this angle or inclination is often referred to as road slope in the longitudinal direction and road banking in the lateral direction. Both road slope and road banking can be given as an average angle between the road and the horizontal plane measured over some local area. The road slope can be both positive (uphill slope) and negative (downhill slope). The angle or inclination of the ground surface 101 relative to Earths horizontal plane translates into a pose of the vehicle 100 relative to the horizontal plane, i.e., the inclination of the road surface normally is the same as the inclination of the vehicle 100 supported thereon, at least in an average sense.

The vehicle 100 comprises one or more control units 160, 170 arranged to control various functions on the vehicle 100 and to receive data from sensors arranged on the vehicle 100, which provide information about the vehicle surroundings and the motion of the vehicle 100 as it moves through the local environment. Some common sensor types include wheel speed sensors that measure rotation speeds of the wheels, global positioning system (GPS) sensors that measure a position of the vehicle on the surface of the Earth, vision-based sensors such as cameras and lidar sensors arranged for environment perception, as well as one or more radar transceiver systems.

Figure 1 illustrates *x*, *y* and *z* axes in a vehicle reference frame or coordinate system. The x-axis is directed in the longitudinal direction of the vehicle 100, while the y-axis is lateral with respect to the longitudinal direction. The z-axis is perpendicular to both the *x* and *y* axes. A rotation about an axis in the vehicle reference frame will be denoted $\omega_i$, where subscript i denotes the axis. The speed over ground along the different axes in the vehicle reference frame will be denoted as $v_x$, $v_y$, $v_z$, and respective accelerations by $a_x$, $a_y$, $a_z$. The axes may be defined relative to the vehicle chassis, so as to span a plane which intersects the chassis.

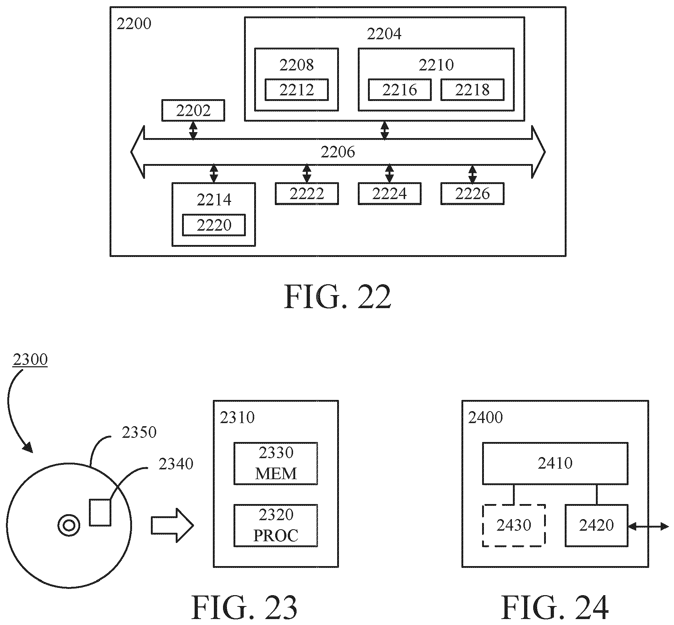

Each control unit 160, 170 may include a microprocessor, microcontroller, programmable digital signal processor or another programmable device. The systems may also, or instead, include an application specific integrated circuit, a programmable gate array or programmable array logic, a programmable logic device, or a digital signal processor. Where the system(s) include(s) a programmable device such as the microprocessor, microcontroller or programmable digital signal processor mentioned above, the processor may further include computer executable code that controls operation of the programmable device. Implementation aspects of the different vehicle unit processing circuits will be discussed in more detail below in connection to the example provided in Figure 22.

As mentioned above, it is often desired to understand how the vehicle 100 moves over the ground surface 101 and also in relation to the gravity vector g. However, the speed over ground $v_x$, $v_y$, $v_z$ of the different wheels (and of the vehicle) may be difficult to obtain with sufficient precision given current state-of-the art techniques. For instance, if wheel speed sensors such as Hall effect sensors or rotational encoders are used to determine vehicle speed over ground, then the vehicle speed over ground will be erroneously determined in case the wheels used for estimating the speed over ground are slipping relative to the ground surface 101. Also, vehicle speed over ground determined based on wheel rotation is one-dimensional, i.e., the method does not allow determining a wheel lateral speed over ground $v_y$ in addition to the longitudinal speed over ground $v_x$, i.e., a speed vector in two dimensions.

Satellite based positioning systems can be used to determine the speed over ground of a heavy-duty vehicle 100 and of any given wheel on the vehicle 100. However, these systems do not function well in some environments, such as environments without a clear view of the sky. Multipath propagation of the satellite radio signals can also induce large errors in the estimated vehicle position, which then translates into errors in the estimated vehicle speed over ground.

Vision-based sensor systems and radar systems can also be used to determine vehicle speed over ground. However, such systems are relatively costly and not always without issues when it comes to accuracy and reliability. Vision-based sensor may for instance suffer from performance degradation due to sun glare while radar sensor systems may be prone to interference from other radar transceivers.

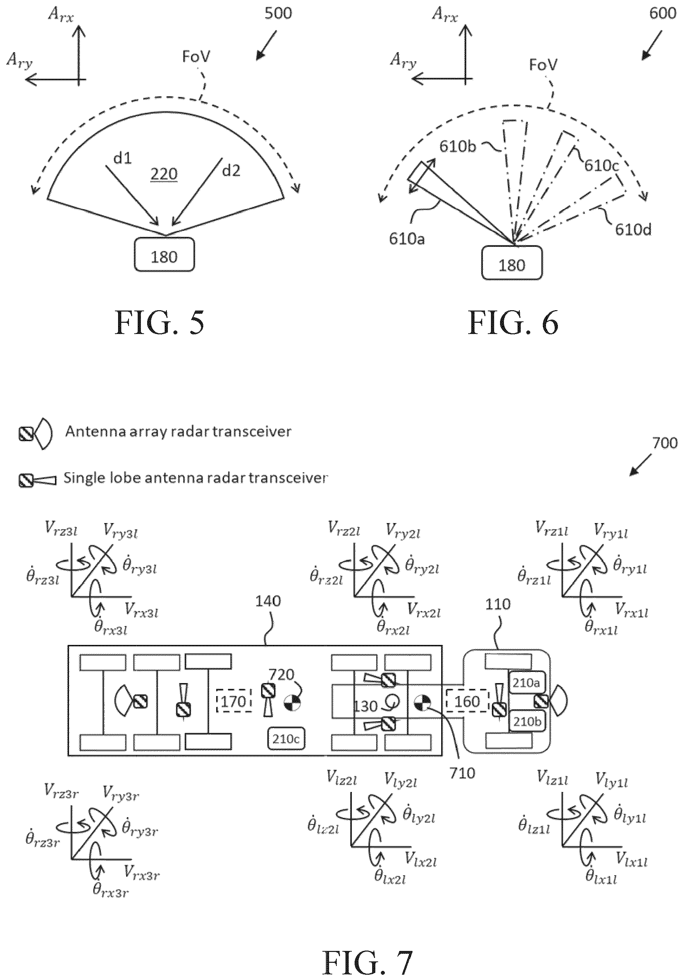

Some examples of the present disclosure proposes the use of radar to determine at least longitudinal and lateral velocity of a vehicle with respect to the ground surface 101, as well as yaw rate, pitch rate and roll rate in the coordinate system of the ground surface 101, referred to herein as a ground surface reference frame. The vehicle 100 therefore comprises a ground radar system with a plurality of ground radar transceivers 180, 181, 182. Each ground radar transceiver comprises a respective antenna arrangement directed towards the ground surface 101. Alternatively, a single radar transceiver with an advanced antenna array capable of illuminating the ground surface in several azimuth angles and elevation angles can be used, as will be explained in more detail below in connection to Figure 5 and Figure 6.

A ground speed radar system is, generally, a system comprising at least one radar transceiver arranged to illuminate a plurality of regions of the ground surface, and to measure at least radial velocity of the radar transceiver relative to the different illuminated regions of ground surface. The radar transceiver or transceivers preferably also measures distance from the radar transceiver or transceivers to the illuminated regions on the ground surface. The ground speed radar system does not necessarily illuminate the vehicle environment above the road surface, although this is a possibility in some cases.

The use of ground speed radar transceivers to determine the speed over ground of a vehicle has been proposed previously, see, e.g., US 2004/0138802 and WO2023169652A1. However, here its use is proposed in combination with the output data from one or more IMUs, to determine vehicle motion in more than one coordinate system, and to estimate Euler angles.

With reference to Figure 2, radar transceivers 201, 202, 203, 204, 205, 206 can be configured to determine a motion state of the vehicle 100 with respect to the ground surface 101 supporting the vehicle 100. This type of radar system comprises at least one radar transceiver arranged to transmit and to receive a radar signal 220 via an antenna arrangement. As the vehicle moves over the ground surface 101 a Doppler shift occurs in the backscatter from the road surface that is received by the radar transceiver. A radial velocity indicating a speed between the radar transceiver and ground can be determined by this Doppler shift in a known manner. Given a sufficient number of such radial velocities, pointing in different directions, the vehicle speed relative to the ground surface and also the yaw rate of the vehicle 100 can be determined. Each, or a subset of, the radar transceivers 201-206 can also be configured to measure a range from the radar transceiver to the respective illuminated region of the ground surface 101. These ranges can be used to determine pitch angle, roll angle, pitch rate, and roll rate, since these motions will give rise to changes in the distance from the radar transceivers to ground, in a known manner. See, e.g., US 2004/0138802 and WO2023169652A1.

Generally, herein, a time derivative will be denoted by a dot, i.e.,

$$\dot{v}_x = \frac{d}{dt}v_x(t)$$

Angular rates relative to the ground surface 101 will be denoted $\dot{\theta}\dot{\theta}_r = [\dot{\theta}_{rx}\,\dot{\theta}_{ry}\,\dot{\theta}_{rz}]^T$ rad/s, accelerations $A_r = [A_{rx}\,A_{ry}\,A_{rz}]^T$ m/s2 and translational speeds $V_r = [V_{rx}\,V_{ry}\,V_{rz}]^T$. In this application, a system of radars can be configured to measure both $\dot{\theta}_r$ and $V_r$. Some of the sensor systems described herein are configured to measure a complete vehicle motion state in a reference frame, while other sensor systems are configured to measure only part of the vehicle motion state.

Each radar transceiver 201-206 is arranged to transmit a radar signal 220 over a radar bandwidth, where a larger bandwidth improves range resolution in a known manner. Velocity resolution depends on the radar wavelength and the repetition period of the waveform in a known manner. According to some examples, the transceiver is arranged to transmit a frequency modulated continuous wave (FMCW) radar signal over the radar bandwidth, where a frequency chirp is swept over the radar bandwidth in cycles. Other types of radar signal formats may also be used, such as band-spread radar signals where orthogonal codes are used to spread a modulated signal over a wide frequency band, or an orthogonal frequency division multiplexed (OFDM) radar signal. Given an FMCW radar signal format, the distance to the ground plane 101 (and also to reflecting material under the road surface) may be determined based on a first Discrete Fourier Transform (DFT), or Fast Fourier Transform (FFT), and the radial velocity or Doppler frequency of the illuminated portion of ground may be determined based on a second DFT or FFT, in a known manner. The result of applying a range FFT and a Doppler FFT is often denoted a range-Doppler map or R-D map for short. A range-Doppler map is a matrix of complex values, where each column index corresponds to backscatter energy received at a given radar antenna from reflections at a given range, and where each row index corresponds to radar backscatter energy received at a given radar antenna from reflections at a given radial velocity relative to the position of the radar transceiver. A good overview of rudimentary FMCW radar processing is given in the lecture notes "Introduction to mmwave Sensing: FMCW Radars" by Sandeep Rao, Texas Instruments, 2017. The Doppler frequency at the range corresponding to the distance between the radar transceiver and ground is indicative of the radial speed at which the ground moves relative to the radar transceiver, as explained in US 2004/0138802 and also in WO2023169652A1. Surface penetrating radar systems are also known which can be used in this application.

Figure 2 illustrates an example vehicle 100 with six radar transceivers 201-206. It is noted that the teachings herein are applicable also for fewer or more radar transceivers. Figure 2 shows a side view, a front view, and a top view of the same vehicle 100. In this case each transceiver comprises a single fixed transmission lobe antenna arrangement. However, particular advantages may be obtained by the use of antenna arrays, as will be discussed on more detail below in connection to Figure 5 and Figure 6. The radar system in Figure 2 can as mentioned above be used to measure both $\dot{\theta}_r$ and $V_r$ in the reference system of the ground surface 101, i.e., in a ground surface reference frame.

Each radar transceiver 201-206 illuminates a relatively small portion of the ground surface 101. Various illumination patterns can be selected, but it is an advantage if the illuminated portion of the ground surface by a given radar transceiver is close to a wheel and relatively small in size, since then a more specific wheel motion relative to the ground surface can be obtained. It is an advantage if each radar transceiver is directed towards a portion of the ground surface 101 located within a future, current, or past region 230 covered by the vehicle, as shown in Figure 2 top view, since disturbance may be caused by objects to the side of the vehicle, such as other vehicle, road guard rails, and other obstacles.

The vehicle 100 also comprises at least one IMU 210. An IMU is an electronic device that measures and reports a body's specific force, angular rate, and sometimes the orientation of the body, using a combination of accelerometers, gyroscopes, and sometimes also magnetometers. An IMU generally measures accelerations $a_x$, $a_y$, $a_z$ along $x$, $y$, $z$ axes in the vehicle reference frame, and also yaw rates $\omega_x$, $\omega_y$, $\omega_z$ about each axis in the vehicle reference frame. The $x$-axis of the vehicle reference frame is pointing in the vehicle longitudinal direction, the $y$-axis points in the lateral direction (to the left when facing forwards), and the $z$-axis is pointing upwards in a direction that is normal to the wheelbase plane spanned by the $x$ and $y$ axes. Angular rates about the axes in the vehicle reference frame are denoted $\omega = [\omega_x\ \omega_y\ \omega_z]^T$ rad/s and accelerations along the axes are denoted $a = [a_x\ a_y\ a_z]^T$ m/s$^2$. The translational speeds are denoted by $v = [v_x\ v_y\ v_z]^T$. Each IMU 210 on the vehicle is measuring $\omega$ and $a$, although it is noted that the position of the IMU on the vehicle will have an impact on the output of the IMU. The output from each IMU will be affected by the pose of the IMU relative to the gravity vector, as will be explained in the following.

Today, motion estimation in many vehicles, such as the vehicle 100 discussed above in connection to Figure 1, primarily relies on using IMUs and wheel speed sensors to determine vehicle motion. The wheel speed sensors provide information about how fast the wheel rotates, and this may or may not correspond to the speed of the vehicle relative to the ground surface 101, depending on if the wheel is slipping relative to the surface or not. The IMU 210 provides motion data in the vehicle reference frame, i.e., $\omega$ and $a$. With reference frame means here that IMU 210 measures in the vehicle's coordinate system using the earth as a reference. However, the output from the IMU is affected by the gravity vector (in a known manner), which impact depends on the so-called Euler angles, $\theta = [\theta_x, \theta_y, \theta_z]$, which represent the rotations that translate between the Inertial reference frame of Earth and the vehicle reference frame. The influence from gravity can be explained by Einstein's equivalence principle, which states that it is not possible to distinguish between a change in speed and influence from gravity. Using only IMUs and wheel speed sensors, it is impossible or at least very difficult to distinguish reliably between changes in road slope and road banking from a change in pitch and roll motion of the vehicle relative the road surface.

For motion planning, one typically need motion estimates to be expressed in the ground surface coordinates, i.e., in the ground surface reference frame. For understanding of the dynamics of the vehicle, e.g., vehicle stability, etc., motion estimates are often desired to be expressed relative to the gravity vector, i.e., in the Inertial reference system. Since the motion of the vehicle relative to the ground surface is typically not measured directly by sensors today, it is popular to make assumptions about the physics of the vehicle, and to infer motion of the vehicle relative to the ground surface based on the assumptions. For example, for a known lateral acceleration, there is a certain expected chassis roll motion caused by the suspension deflection on the vehicle. In some applications, vertical suspension travel sensors are used to measure deflection of the suspension, which indicates how much that part of the vehicle body "drops" or "lifts", which then can be used to compute roll or/and pitch angle in the ground surface reference plane. Even here there are some assumptions, e.g., tyre deflection is excluded from consideration.

A purpose of the techniques disclosed herein is to allow concurrent identification of the vehicle motion in two or more reference frames, such as a vehicle reference frame, a ground surface reference frame, and an Earth inertial measurement frame. This allows a motion estimate to be determined which identifies both vehicle motion and road geometry at the same time, such that vehicle pitch and roll motion relative to the road surface can be distinguished from changes in road slope and banking in a reliable manner. A system having access to this type of estimate can thus identify if an output pitch rate from an IMU is due to an actual pitch rate of the vehicle relative to the ground surface, or if the pitch rate measured by the IMU is in fact the result of a change in road slope.

The range information from the radar transceiver or transceivers to the ground surface can be used to determine pitch angle, roll angle, and vehicle heave, since the ranges change with pitch, roll and heave in a known manner.

A vehicle control system having access to this type of refined motion estimate may control the vehicle in a more reliable manner. The vehicle control may comprise, e.g., control of vehicle steering, brakes, propulsion, active suspension systems, and so on.

At least some of the teachings herein are based on the realization that a ground speed radar system, such as that discussed above in connection to Figure 2, measures vehicle motion in the ground surface reference frame, while an IMU mounted on the vehicle provides output data in the vehicle reference frame. A vehicle motion estimation system which comprises an IMU system with one or more IMUs and a ground speed radar system with a plurality of radar transceivers can thus be used to separate the effects on vehicle motion from changes in road geometry from changes in vehicle motion due to motion actuator control and other external forces acting on the vehicle, such as wind.

According to the teachings herein, one or more radar transceivers 180 are configured to measure the vehicle's pitch and roll orientation and their derivatives, and also translational speeds of the vehicle relative the ground surface, i.e., $\dot{\theta}_r$ and $V_r$ relative to the ground surface 101. One or more IMUs comprising accelerometers and gyroscopes are concurrently used to measure angular rates and accelerations in the vehicle reference frame, i.e., $\omega$ and $a$.

A sensor fusion algorithm such as an advanced sensor fusion filter or a more simple structure of reduced complexity can be used to jointly process the measurements from the radar system and the IMU system and output motion state estimates in two different reference frames. Vehicle motion estimates can for instance be output as: A) the vehicle's motion relative the ground surface 101, and B) the orientation of the ground surface 101 (in terms of, e.g., slope and banking) with respect to the Inertial reference frame, possibly along with the respective gradients of the slope and banking as function of travelled distance or time (which then becomes a function of the vehicle speed over ground).

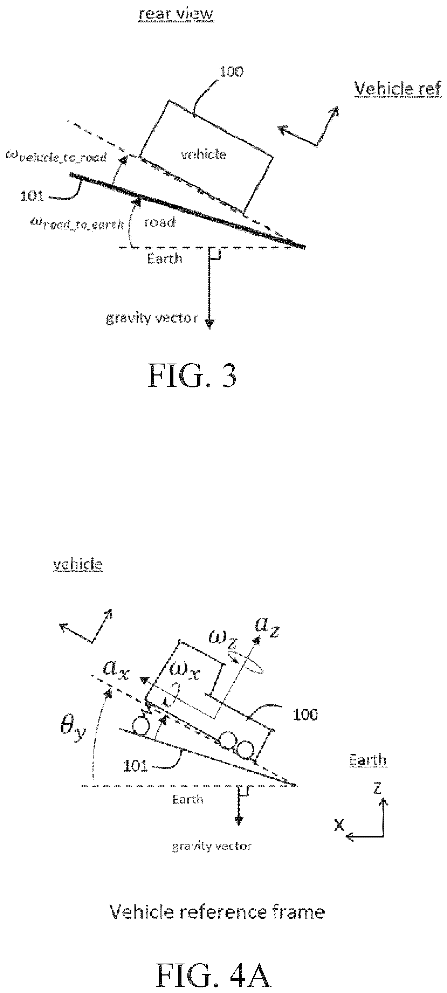

Figure 3 provides an illustrative example of the techniques disclosed herein. A rear view of a vehicle 100 is schematically shown in Figure 3. The road in this case has a non-zero banking angle which is changing as function of travelled distance and the vehicle at the same time has a non-zero roll angle relative to the road, i.e., relative to the ground surface 101, which is changing over time. The vehicle 100 in Figure 3 thus has a chassis roll-rate $\omega_{x,vehicle\_to\_road}$, which is to be interpreted here as the change (with respect to time) of the vehicle's roll angle relative the ground surface 101. The ground surface 101 at the same time changes it's banking with respect to time (or distance), and this change is here denoted $\omega_{x,road\_to\_earth}$.

Assume that an IMU system and a radar system are both configured to measure roll-rate, denoting the measurements $m_{IMU}$ and $m_{radar}$ respectively. The following relation then exists between roll-rate measurements and vehicle motion states:

$$\begin{bmatrix} m_{IMU} \\ m_{radar} \end{bmatrix} = \begin{bmatrix} 1 & 1 \\ 0 & 1 \end{bmatrix} \cdot \begin{bmatrix} \omega_{x,road\_to\_earth} \\ \omega_{x,vehicle\_to\_road} \end{bmatrix}$$

In other words, the IMU measures the total roll-rate between the vehicle and the gravity vector g, while the ground speed radar system only measures the roll-rate between the vehicle and the ground surface 101, regardless of how the road inclination relative to the Earth horizontal plane changes over time or distance. Note that $\omega_{x,road\_to\_earth}$ is a hidden state, which cannot be identified by using only one of the two sensors (IMU and ground radar system). However, taking the inverse of the observation matrix above, we can identify both states:

$$\begin{bmatrix} \omega_{x,road\_to\_earth} \\ \omega_{x,vehicle\_to\_road} \end{bmatrix} = \begin{bmatrix} 1 & -1 \\ 0 & 1 \end{bmatrix} \cdot \begin{bmatrix} y_{IMU} \\ y_{radar} \end{bmatrix}$$

In this simple example, the combination of using IMU and ground speed radar provides the possibility to jointly estimate the roll-rate of the vehicle and the "banking rate" of the road. This example is an example of how the output data from the ground speed radar system and the output data from the IMU system can be jointly processed to obtain an estimate of the motion of the vehicle and at the same time an estimate of the road geometry relative to Inertial reference system. The same straight forward principle can be applied to determine pitch-rate of the vehicle relative to the ground surface and corresponding change in road slope.

Consequently, there is disclosed a control system for controlling motion of a vehicle, where the vehicle comprises a ground speed radar system arranged to measure motion of the vehicle relative to a ground surface supporting the vehicle in a ground surface reference frame, and an IMU system arranged to measure motion of the vehicle in a vehicle reference frame. The control system comprises processing circuitry configured to obtain radar data from the radar system and IMU data from the IMU system, and to determine the vehicle's motion relative the ground surface 101, and the orientation of the ground surface (in terms of, e.g., slope and banking) with respect to the Inertial reference frame, optionally together with the respective gradients of the slope and banking as function of travelled distance or time which then becomes a function of the vehicle speed over ground.

The underlying principles of the simple example in Figure 3 can be extended to cover both roll-rate, pitch-rate, and yaw-rate, as will be explained in more detail in the following. A signal processing architecture such as a filter or data fusion module can be designed to jointly process the data from the IMU or IMUs on a vehicle and the ground speed radar system to identify contributions to motion of the vehicle from the motion actuators on the vehicle and from the ground surface itself.

The design may, e.g., comprise a model of vehicle dynamics describing the kinematics of the vehicle. A state vector includes states of the road and the vehicle in the different reference frames. A state prediction can be done using the model, followed by a measurement update by using measurements from both the radar and the IMU. Finally, the prediction is corrected by the measurement and weighted by model and measurement uncertainty, using techniques known in the art.

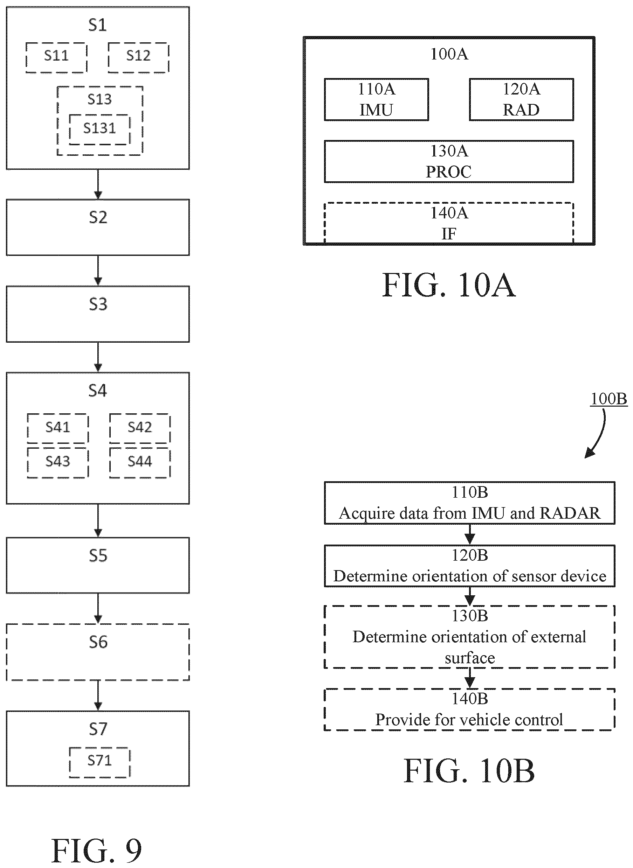

To summarize, with reference to Figure 9, the present disclosure relates to a computer-implemented method for controlling motion of a vehicle 100. The method comprises configuring S1 a ground speed radar system 201-206 arranged to measure motion of the vehicle 100 relative to a ground surface 101 supporting the vehicle 100 in a ground surface reference frame, and an IMU system 210 arranged to measure motion of the vehicle 100 in a vehicle reference frame. Both the ground surface reference frame and the vehicle reference frame was discussed above. The method comprises obtaining S2 radar data from the radar system and IMU data from the IMU system. As noted above, this data is obtained in two different coordinate systems, which is important in order to be able to estimate motion of the vehicle in two different reference frames. The method also comprises determining S3 motion by the vehicle 100 in the ground surface 101 reference frame based on the radar data and determining S4 motion by the vehicle 100 in the vehicle reference frame based on the IMU data. The method also comprises identifying S5 an orientation of the ground surface 101, such as road slope or road banking, relative to Earths horizontal plane, based on joint processing of the radar data and on the IMU data. This allows for a more accurate and also a more reliable control S7 of the motion of the vehicle 100 since this control can now be based at least in part on the orientation of the ground surface 101 relative to gravity.

This simple example in Figure 3 can be generalized to a more complete theory which allows estimation of vehicle motion in a ground surface reference frame and also in relation to the gravity vector, i.e., in an inertial reference frame. The theory here aims to give a more formal description of the coordinate systems, and how to translate between them. With reference to Figures 4A-C, there are three different reference frames or coordinate systems to consider. The motion of the vehicle can be described in any of the three reference frames. Different sensors, depending on the sensor technology, provide sensor output in different reference frames.

**Figure 4A - the vehicle reference frame:** The axes in this coordinate system "follows" the vehicle when it is under motion. The x-axis is pointing in the vehicle longitudinal direction, the y-axis points in the lateral direction (to the left when facing forwards), and the z-axis is pointing upwards normal to the wheelbase plane spanned by the x and y axes. Angular rates about the axes are denoted $\omega = [\omega_x \, \omega_y \, \omega_z]^T$ rad/s and accelerations along the axes are denoted $a = [a_x \, a_y \, a_z]^T$ m/s$^2$. The translational speeds are denoted as $v = [v_x \, v_y \, v_z]^T$. In this application an IMU is measuring $\omega$ and $a$. Note that the IMU cannot measure $v$ directly. The IMU can only output an estimate of $v$ given a known initial velocity by using an integration of a time sequence of vehicle accelerations in $a$. The longitudinal acceleration that is output from an IMU mounted on the vehicle 100 provides acceleration data in the vehicle reference frame, but this acceleration data will of course be affected by the gravity vector. Suppose for instance that a vehicle is parked in a downward slope having inclination $\alpha$ in the vehicle longitudinal direction and no banking, i.e., no lateral slope in the vehicle reference frame. The longitudinal acceleration that is output from the vehicle IMU will then be $a_x = g \, sin(\alpha)$. If the vehicle then starts to accelerate along the slope, then output from the IMU will change to $a_x = \dot{v}_x + g \, sin(\alpha)$, i.e., the sum of the gravity contribution and the change in longitudinal speed in the vehicle reference frame. As shown in Figure 4A, the vehicle reference frame is normally defined to be parallel with the vehicle chassis. The suspension of the vehicle 100 can result in an angle relative to the ground plane 101. In the example of Figure 4A, a pitch angle is present.

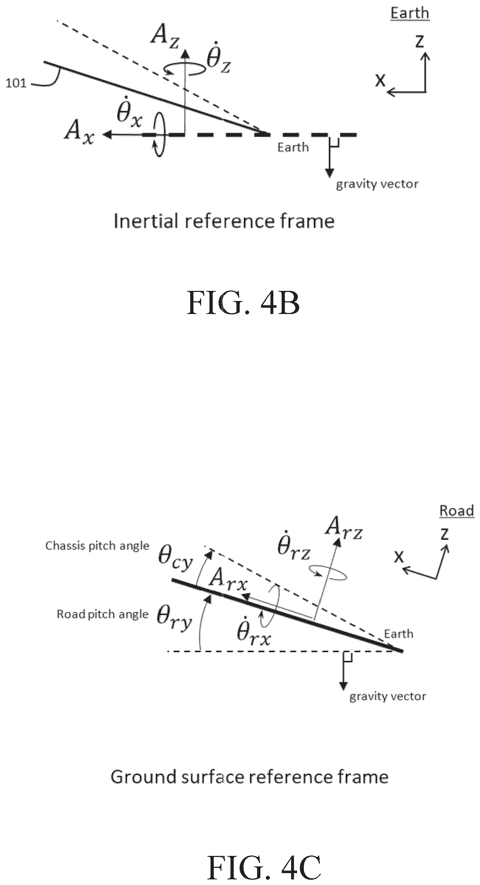

**Figure 4B - the Inertial reference frame:** This reference frame is defined based on the gravity vector and the Earth coordinate system, where the xy-plane is parallel to the horizontal plane and where the z-axis is aligned with the gravity vector, i.e., pointing upwards. In most applications the yaw angle in the Inertial reference plane is of little consequence, hence the rotation of the xy-plane in the Inertial reference frame is often taken to be the same as that in the vehicle reference frame. Angular rates in the reference frame are denoted $\dot{\theta} = [\dot{\theta}_x \, \dot{\theta}_y \, \dot{\theta}_z]^T$ rad/s and accelerations $A =$

$[A_x A_y A_z]^T$ m/s² and translational speeds $V = [V_x V_y V_z]^T$. In this application, *none* of these entities can be measured directly by a sensor arranged on the vehicle 100. Both $A$ and $V$ are projections of motion in the vehicle reference frame onto the Inertial reference frame. In the example with the parked car in the slope above, the acceleration in the Inertial reference frame is $A = [0\ 0\ g]^T$. $\theta = [\theta_x, \theta_y, \theta_z]$ are the Euler angles which represent the rotations that translate between the Inertial reference frame and the vehicle reference frame.

**Figure 4C - the ground surface reference frame:** This frame is defined in relation to the ground surface 101, i.e., the xy-plane is in this case parallel to the ground surface 101, or in the case of an uneven ground surface parallel to an approximate extension plane of the ground surface, such as a least-squares fit of a plane to the ground surface. The z-axis is normal to the ground surface 101, i.e., pointing upwards and away from the road surface. Angular rates are here denoted $\dot{\theta}_r = [\dot{\theta}_{rx}\ \dot{\theta}_{ry}\ \dot{\theta}_{rz}]^T$ rad/s, accelerations $A_r = [A_{rx} A_{ry} A_{rz}]^T$ m/s² and translational speeds $V_r = [V_{rx} V_{ry} V_{rz}]^T$. In this application, a system of radars can be configured to measure $\dot{\theta}_r$ and $V_r$, as discussed above in connection to Figure 2 (in practice, measurements need to be projected to the road). $A_r$ cannot be measured directly since the radar system "misses" the effect of gravity. The radar can, however, measure acceleration by the vehicle on the ground surface 101 without accounting for the gravity component in the acceleration.

The orientation of the vehicle relative to the Inertial reference frame is defined by the Euler angles $\theta = [\theta_x \theta_y \theta_z]^T$. To transform variables from inertial coordinates to vehicle coordinates three rotational operations must be applied via the three matrices. Note that several definitions of Euler angles exist in the literature, depending on in which order the rotations are done, and hence the order of multiplication of the three matrices. Note that the product is non-commutative. The rotation matrix around the x, y and z axis are as follows:

$$T_x = \begin{bmatrix} 1 & 0 & 0 \\ 0 & cos\ \theta_x & sin\ \theta_x \\ 0 & -sin\ \theta_x & cos\ \theta_x \end{bmatrix}$$

$$T_y = \begin{bmatrix} cos\ \theta_y & 0 & -sin\ \theta_y \\ 0 & 1 & 0 \\ sin\ \theta_y & 0 & cos\ \theta_y \end{bmatrix}$$

$$T_z = \begin{bmatrix} cos\ \theta_z & sin\ \theta_z & 0 \\ -sin\ \theta_z & cos\ \theta_z & 0 \\ 0 & 0 & 1 \end{bmatrix}$$

The total transform from the Inertial reference frame to the vehicle reference frame is then

$$T = T_x T_y T_z$$

When angular rates are given in the inertial coordinate system, the angular rates in the vehicle coordinates are found as

$$\begin{bmatrix} \omega_x \\ \omega_y \\ \omega_z \end{bmatrix} = T_x \begin{bmatrix} \dot{\theta}_x \\ 0 \\ 0 \end{bmatrix} + T_x T_y \begin{bmatrix} 0 \\ \dot{\theta}_y \\ 0 \end{bmatrix} + T_x T_y T_z \begin{bmatrix} 0 \\ 0 \\ \dot{\theta}_z \end{bmatrix}$$

The transform from the vehicle reference frame to the Inertial reference frame is

$$T^{-1} = \left( T_x T_y T_z \right)^{-1}$$

Translation of angular rates from vehicle reference frame to Inertial reference frame

Angular rates $\omega = [\omega_x \omega_y \omega_z]^T$ in the vehicle reference frame such as rates measured by the IMU are translated to angular rates $\dot{\theta} = [\dot{\theta}_x \dot{\theta}_y \dot{\theta}_z]^T$ in the Inertial reference frame as follows:

$$\boldsymbol{\omega} = \begin{bmatrix} \omega_x \\ \omega_y \\ \omega_z \end{bmatrix} = \begin{bmatrix} 1 & 0 & -\sin(\theta_y) \\ 0 & \cos(\theta_x) & \cos(\theta_y)\cdot\sin(\theta_x) \\ 0 & -\sin(\theta_x) & \cos(\theta_y)\cdot\cos(\theta_x) \end{bmatrix} \cdot \begin{bmatrix} \dot{\theta}_x \\ \dot{\theta}_y \\ \dot{\theta}_z \end{bmatrix} = \boldsymbol{R}(\boldsymbol{\theta})\cdot\dot{\boldsymbol{\theta}} \qquad (1)$$

where $\theta = [\theta_x\,\theta_y\,\theta_z]^T$ are the Euler angles, which represent tilt angles between the vehicle reference frame and the Inertial reference frame. Equation 1 comes from a particular sequence of three rotations. From (1) it is clear that the rate in one frame to another depends on the Euler angles. Note that, in case $\theta_x = \theta_y = 0$, then the angular rates of the two systems coincide, since cos(0) = 1 and sin(0) = 0:

$$\begin{bmatrix} \omega_x \\ \omega_y \\ \omega_z \end{bmatrix} = \begin{bmatrix} 1 & 0 & 0 \\ 0 & 1 & 0 \\ 0 & 0 & 1 \end{bmatrix} \cdot \begin{bmatrix} \dot{\theta}_x \\ \dot{\theta}_y \\ \dot{\theta}_z \end{bmatrix} = \begin{bmatrix} \dot{\theta}_x \\ \dot{\theta}_y \\ \dot{\theta}_z \end{bmatrix}.$$

Assume now that a vehicle is driving downhill along a helical spiral in, e.g., between floors in a large parking garage. We have the following Euler angles and Euler angle derivatives:

|  | Euler angles | Euler angles derivatives |
|---|---|---|
| **Roll** | $\theta_x = 0$ | $\dot{\theta}_x = 0$ |
| **Pitch** | $\theta_y = +0.1\ rad$ | $\dot{\theta}_y = 0$ |
| **Yaw** | $\theta_z$ (constantly growing) | $\dot{\theta}_z = +0.3\dfrac{revolution}{s} = 1.9\ rad/s$ |

In this case $\theta_y$ is the (Euler) pitch angle between the vehicle reference frame and the Inertial reference frame. If we assume no chassis pitch angle, then $\theta_y$ represents the pitch angle between the road surface and the Earth horizontal plane, i.e., ground surface pitch angle. With the dimension of the spiral in mind, combined with a certain vehicle speed, a Euler yaw angle rate $\dot{\theta}_z$ in the inertial frame will be present. According to (1):

$$\begin{bmatrix} \omega_x \\ \omega_y \\ \omega_z \end{bmatrix} = \begin{bmatrix} 1 & 0 & -\sin(\theta_y) \\ 0 & \cos(0) & \cos(\theta_y)\cdot\sin(0) \\ 0 & -\sin(\theta_x) & \cos(\theta_y)\cdot\cos(0) \end{bmatrix} \cdot \begin{bmatrix} 0 \\ 0 \\ \dot{\theta}_z \end{bmatrix} = \begin{bmatrix} -\sin(\theta_y)\cdot\dot{\theta}_z \\ 0 \\ \cos(\theta_y)\cdot\dot{\theta}_z \end{bmatrix} \qquad (2)$$

$$= \begin{bmatrix} -\sin(0.1)\cdot 1.9 \\ 0 \\ \cos(0.1)\cdot 1.9 \end{bmatrix} = \begin{bmatrix} -0.19\ rad/s \\ 0\ rad/s \\ 1.89\ rad/s \end{bmatrix}$$

From (2) it is evident that the roll-rate sensor measures a non-zero roll-rate $\omega_x$ even though the vehicle has a constant roll angle, which may seem counterintuitive.
From (1) the inverse is formulated as:

$$\dot{\boldsymbol{\theta}} = \boldsymbol{R}^{-1}(\boldsymbol{\theta})\cdot\boldsymbol{\omega} \rightarrow \begin{bmatrix} \dot{\theta}_x \\ \dot{\theta}_y \\ \dot{\theta}_z \end{bmatrix} = \begin{bmatrix} 1 & \sin(\theta_x)\cdot\tan(\theta_y) & \cos(\theta_x)\cdot\tan(\theta_y) \\ 0 & \cos(\theta_x) & -\sin(\theta_x) \\ 0 & \sin(\theta_x)/\cos(\theta_y) & \cos(\theta_x)/\cos(\theta_y) \end{bmatrix} \cdot \begin{bmatrix} \omega_x \\ \omega_y \\ \omega_z \end{bmatrix} \qquad (3)$$

If $\omega$ is measured by an IMU, then (3) can be used together with integration:

$$\boldsymbol{\theta}(t) = \int_0^t \dot{\boldsymbol{\theta}}\ d\tau + \boldsymbol{\theta}_0 \qquad (4)$$

where $\theta_0$ is the initial condition of the Euler angles. In practice, the integration will suffer from drift, so the key is to also use accelerometer data from the IMU as another way to estimate the Euler angles.

The acceleration by the vehicle in the vehicle reference frame, corresponding to the output of the accelerometers in the IMU, has the following relation with speeds and gravity:

$$\boldsymbol{a} = \begin{bmatrix} a_x \\ a_y \\ a_z \end{bmatrix} = \begin{bmatrix} \dot{v}_x \\ \dot{v}_y \\ \dot{v}_z \end{bmatrix} + \begin{bmatrix} \omega_y v_z - \omega_z v_y \\ \omega_z v_x - \omega_x v_z \\ \omega_x v_y - \omega_y v_x \end{bmatrix} + g \cdot \begin{bmatrix} -\sin(\theta_y) \\ \sin(\theta_x)\cos(\theta_y) \\ \cos(\theta_x)\cos(\theta_y) \end{bmatrix} \tag{5}$$

The interpretation of (5) is that a measured acceleration is a summation of a change in speed over time in the vehicle reference frame, a centripetal acceleration, and gravity. Note the importance of the Euler angles $\theta = [\theta_x \theta_y \theta_z]^T$ in (5).

It is also noted that equation (5) or similar models of the IMU output can be used to determine the current Euler angles of a vehicle 100 and/or of the ground surface 101. In equation (5), $v_x, v_y, v_z, \dot{v}_x, \dot{v}_y, \dot{v}_z$ can be obtained from the ground speed radar system and $\omega_x, \omega_y, \omega_z$ can be obtained from the ground speed radar system and/or from the IMU system. This means that the only remaining unknown in equation (5) are the Euler angles $\theta_x, \theta_y, \theta_z$. Hence, it is possible to determine the vector Euler angle $\theta = [\theta_x, \theta_y, \theta_z]$ from the radar data in combination with the IMU data.

Both the Inertial reference frame and the ground surface reference frame are non-moving coordinate systems and the translation between them is just done by multiplying by a rotation matrix, where $\theta_r$ is the Euler angles between the Inertial reference frame and the ground surface reference frame. The translation between the Inertial reference frame and the ground surface reference frame can be determined using range data from the radar system, i.e., the distances from the radar transceivers to the illuminated regions on the ground surface, which change with pitch angle, roll angle, and heave (vertical offset between vehicle and road surface). Specifically, $\theta_x$ is the road or surface bank angle and $\theta_y$ is the road or surface slope angle relative to the Earth horizontal plane.

$$\dot{\boldsymbol{\theta}}_r = \begin{bmatrix} \dot{\theta}_{rx} \\ \dot{\theta}_{ry} \\ \dot{\theta}_{rz} \end{bmatrix} = \begin{bmatrix} \cos(\theta_{ry}) & 0 & -\sin(\theta_{ry}) \\ \sin(\theta_{rx})\cdot\sin(\theta_{ry}) & \cos(\theta_{rx}) & \sin(\theta_{rx})\cdot\cos(\theta_{ry}) \\ \cos(\theta_{rx})\cdot\sin(\theta_{ry}) & -\sin(\theta_{rx}) & \sin(\theta_{rx})\cdot\cos(\theta_{ry}) \end{bmatrix} \cdot \begin{bmatrix} \dot{\theta}_x \\ \dot{\theta}_y \\ \dot{\theta}_z \end{bmatrix} \tag{6}$$

$$= \boldsymbol{B}(\boldsymbol{\theta}_r) \cdot \dot{\boldsymbol{\theta}}$$

The same transformation is used for speeds and accelerations.

$$\boldsymbol{v}_r = \boldsymbol{B}(\boldsymbol{\theta}_r) \cdot \boldsymbol{V} \tag{7a}$$

$$\boldsymbol{a}_r = \boldsymbol{B}(\boldsymbol{\theta}_r) \cdot \boldsymbol{A} \tag{7b}$$

Filter design for joint processing of radar data and IMU data

The filter design relies on selecting states, prediction model and measurement model. There are many options on how to select these. We will outline the principle of a complete filter:

States:

$\theta, \dot{\theta}, \boldsymbol{A}, V$ (inertial states, angles and their derivatives between vehicle and earth, acceleration, and speed in the inertial frame)

$\theta_r, \dot{\theta}_r, \boldsymbol{A}_r, \boldsymbol{V}_r$ (ground surface states, angles and their derivatives between vehicle and road, acceleration, and speed in road frame)

$\omega, \boldsymbol{v}, \boldsymbol{a}$ (vehicle states, angular speed, translational speed, and translational acceleration in the vehicle-fixed frame)

Measurements:

$\omega, \boldsymbol{a}$ (IMU, angular speed, and translational acceleration in the vehicle-fixed frame)

$\theta_r, \dot{\theta}_r, \pmb{A}_r, \pmb{V}_r$ (radar system, angles and their derivatives between vehicle and road, acceleration and speed given in the ground surface reference frame).

Sensor configuration:

The IMU should preferably be a 6 degrees of freedom (DoF) IMU mounted somewhere at or inside the vehicle body. The radar system should be configured in a way such that it can measure 6 degree of freedom using both speed and range, i.e., roll angle, pitch angle, and yaw angle and also their time derivatives, longitudinal, lateral, and vertical distance, and speed between vehicle body and road. At least 6 single lobe radars can be used for this purpose, where each radar measures radial range and speed relative to the ground surface. Antenna arrays can be used to reduce the number of radar transceivers.

As mentioned above one or more radar transceivers 180 may comprise more advanced antenna arrays 500, 600 as illustrated in Figure 5 and in Figure 6. An antenna array is a device comprising a plurality of antenna elements. Each pair of transmit antenna and receive antenna in the array gives rise to a respective range-Doppler map, indicating received radar signal energy at different distances and radial velocities. Each range-Doppler map cell is a complex value associated with a phase and a magnitude, in a known manner. A complex-valued vector of signal values corresponding to a given range and Doppler can be obtained by extracting corresponding values from the R-D map of each antenna pair. The array may comprise multiple antenna elements that are spaced uniformly such as on the order of a half-lambda. Alternatively, they may be spaced more than half lambda. Some previously known radar systems use multiple transmission antennas either sequentially or simultaneously in time to create a virtual aperture sometimes referred to as a Synthetic Aperture Radar (SAR), that is larger than the physical array. The net effect is a relatively small number of real or virtual antenna elements and a relatively small physical aperture. The angle of arrival of an incoming radar reflection can be determined conveniently by a third FFT - the angle FFT, applied to range-Doppler cells from each range-Doppler map generated by each transmit-antenna pair in the radar sensor array, after appropriate zero-padding. The determination of target angle using an FFT may for instance be realized using the Bartlett algorithm. The Bartlett algorithm is generally known and will therefore not be discussed in more detail herein. In case the antenna element spacing is non-uniform, a zero-padding of the complex-valued vector may be needed prior to the FFT operation.

The antenna array 500, 600 can be configured to emit the radar signal 220 in a transmission lobe simultaneously covering a field of view (FoV) comprising a range of azimuth and/or elevation directions, as illustrated by the example 500 in Figure 5, or in one or more transmission lobes that are narrower than the FoV, as illustrated by the example 600 in Figure 6. The narrow transmission lobe in Figure 6 can also be swept over the range as illustrated by transmission lobe 610a (illustrated by solid line) or emitted as a plurality of separate narrow beams 610b, 610c, 610d (illustrated by dash-dotted lines) which at least partly covers the FoV, i.e., the range of azimuth directions covered by the radar transceiver. The separate narrow beams 610b, 610c, 610d may be partly overlapping, or separated from each other. There may also be gaps in-between the narrow beams 610b, 610c, 610d as in the example 600.

An antenna array can also be configured to emit the radar signal 220 in a transmission lobe that covers a range of different elevation directions. The radar transceiver can then apply array processing of the received radar signal to also detect radar signal energy incoming from different elevation directions. This is an advantage since more distinct radar signal components may be detected by considering different elevation angles separately. The elevation angle of transmission and/or reception of radar signal energy can also be optimized by varying the elevation angle of the transmission and/or of the reception, e.g., to maximize received radar signal power. Some road surfaces are less prone to reflecting radar signal energy compared to other road surfaces. A rough road surface generally reflects radar signal energy batter than a very smooth road surface, such as a road surface with standing water. The better the road surface reflects radar signal energy, the less steep the elevation angle can be. I.e., in case the road surface reflects radar signal energy poorly the angle can be decreased, directing the radar signal more directly towards the road surface, and vice versa.

Figure 7 shows an example vehicle 700 that comprises a plurality of radar transceivers, among which two comprise more advanced antenna arrangements, i.e., antenna arrays which can measure radial velocities and distances to the ground in several different directions simultaneously or sequentially. This motion estimation system can be used to determine motion of the articulated vehicle at several different places on the vehicle, as illustrated in Figure 7. The centers of gravity 710, 720 of the two vehicle units are indicated in Figure 7. The IMU system on the vehicle 700 comprises three IMU sensors 210a, 210b, 210c.

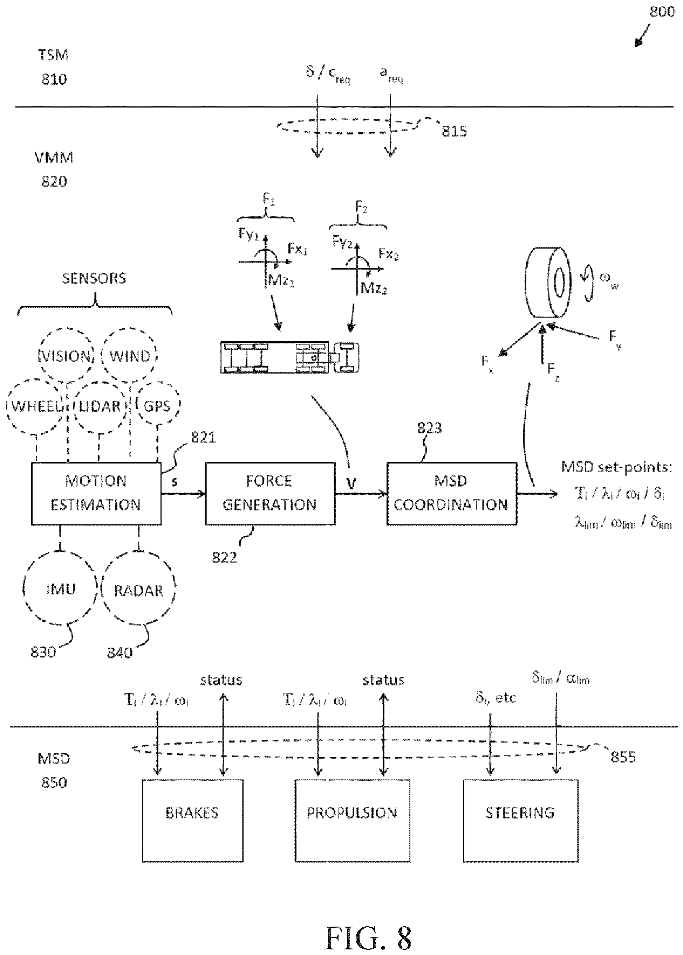

Figure 8 illustrates an example vehicle control function architecture applicable with the herein disclosed methods, control units and sensor systems. A traffic situation management (TSM) function 810 plans driving operations of the vehicle 100 with a time horizon of 10 seconds or so. This time frame corresponds to, e.g., the time it takes for the vehicle 100 to negotiate a curve or the like. The vehicle maneuvers, planned and executed by the TSM function, can be associated with acceleration profiles $a_{req}$ and curvature profiles $c_{req}$ which describe a desired target vehicle velocity in the vehicle forward direction and turning to be maintained for a given maneuver. Steering angles $\delta$ may also be comprised in the output 815 from the TSM function 810. The TSM function continuously requests the desired acceleration profiles $a_{req}$ and steering angles (or curvature profiles $c_{req}$) from a vehicle motion management (VMM) function 820 which performs force allocation to meet the requests from the TSM function in a safe and robust manner. The VMM function 820 operates on a timescale of below one second or so and will be discussed in more detail below.

The VMM function 820 continuously transforms the acceleration profiles $a_{req}$ and curvature profiles $c_{req}$ from the TSM function into control commands for controlling vehicle motion functions, actuated by the different motion support devices (MSDs) of the vehicle 100 which report back capabilities to the VMM, which in turn are used as constraints in the vehicle control. The MSDs are generally controlled by an MSD control function 850, and the MSDs may comprise actuators such as brakes, propulsion devices, and steering. The VMM function 820 performs vehicle state or motion estimation 821 according to the teachings herein, based primarily on IMU data 830 and ground speed radar data 840. However, other sensor signals may also be used in the motion estimation 821 performed by the VMM function 820.

The VMM function 820 continuously determines a vehicle state s comprising positions, speeds, accelerations, and potentially also articulation angles of the different units in the vehicle combination by the techniques discussed herein.

The result of the motion estimation 821, i.e., the estimated vehicle state s, is input to a force generation module 822 which determines the required global forces $F=[F_1, F_2]$ for the different vehicle units to cause the vehicle 100 to move according to the requested acceleration and curvature profiles $a_{req}$, $c_{req}$, and to behave according to the desired vehicle behavior. The required global force vector F is input to an MSD coordination function 823 which allocates wheel forces and coordinates other MSDs such as steering and suspension. The MSD coordination function outputs an MSD control allocation for the i:th wheel, which may comprise any of a torque $T_i$, a target longitudinal wheel slip $\lambda_i$, a wheel rotational speed $\omega_i$, and/or a wheel steering angle $\delta_i$. The coordinated MSDs then together provide the desired lateral $F_y$ and longitudinal $F_x$ forces on the vehicle units, as well as the required moments $M_z$, to obtain the desired motion by the vehicle combination 100.

Thus, according to some examples, the VMM function 820 manages both force generation and MSD coordination, i.e., it determines what forces that are required at the vehicle units in order to fulfil the requests from the TSM function 810, for instance to accelerate the vehicle according to a requested acceleration profile requested by TSM and/or to generate a certain curvature motion by the vehicle also requested by TSM. The forces may comprise e.g., yaw moments $M_z$, longitudinal forces $F_x$ and lateral forces $F_y$, as well as different types of torques to be applied at different wheels. The forces are determined such as to generate the vehicle behavior which is expected by the TSM function in response to the control inputs generated by the TSM function 810.

The architecture illustrated in Figure 8 is an example of how the vehicle motion estimation techniques can be used to control motion of the vehicle 100 based on the motion estimation techniques disclosed herein.

Figure 9 is a flow chart which illustrates methods that summarize the teachings herein. There is illustrated a computer-implemented method for controlling motion of a vehicle 100, 700. The method comprises configuring S1 a ground speed radar system 201-206 arranged to measure motion of the vehicle 100, 700 relative to a ground surface 101 supporting the vehicle 100, 700 in a ground surface reference frame, and an IMU system 210 arranged to measure motion of the vehicle 100, 700 in a vehicle reference frame. The ground surface reference frame and the vehicle reference frames were exemplified above. It is noted, however, that several different definitions of the reference frames are possible within the scope of the present disclosure. The vehicle reference frame generally relates to a reference frame which follows the vehicle as it moves over the ground surface, while the ground surface reference frame is tightly connected to the ground surface and defined based on the geometry of the ground surface.

The method comprises obtaining S2 radar data $\dot{\theta}_r$, $V_r$ from the radar system and IMU data $\omega$, $a$ from the IMU system. The radar data is obtained from a ground speed radar system and may, generally, comprise ground speeds in several directions from the vehicle, and also distances to ground from several locations on the vehicle. The IMU data is obtained from one or more IMUs located on the vehicle. The IMUs may be located at different positions on the vehicle, where it is understood that the position on the vehicle of the different IMUs needs to be accounted for when processing the output data from the IMU.

The method also comprises determining S3 motion by the vehicle 100, 700 in the ground surface 101 reference frame based on the radar data $\dot{\theta}_r$, $V_r$, and determining S4 motion by the vehicle 100, 700 in the vehicle reference frame based on the IMU data $\omega$, $a$. Thus, vehicle motion in two different reference frames are determined using the two different types of input data. As discussed above, this diversity in the obtained data not only allows for determining vehicle motion on different reference systems but it also allows for identifying the contribution of the ground surface geometry to the overall motion of the vehicle relative to, e.g., the Inertial reference system defined by the gravity vector g. Thus, the method comprises identifying S5 an orientation of the ground surface 101 relative to a horizontal plane, based on joint processing of the radar data $\dot{\theta}_r$, $V_r$ and on the IMU data $\omega$, $a$, and controlling S7 the motion of the vehicle 100, 700 based at least in part on the orientation of the ground surface 101 relative to gravity g. The control of the vehicle can be done in many different ways, as will be appreciated by the person skilled in the art. Road slope can, for instance, be accounted for when controlling propulsion devices and or brakes on the vehicle to obtain a desired motion by the vehicle.

The method optionally comprises identifying S6 an orientation change rate of the ground surface 101 with respect to a driven distance, based on joint processing of the radar data $\dot{\theta}_r$, $V_r$ and the IMU data $\omega$, $a$. This is an advantage since now the effects on angular rates of the vehicle motion incurred by changes in ground surface can be identified and accounted for in the vehicle control. Thus, according to some examples, method also comprises controlling S71 the motion of the vehicle 100, 700 based at least in part on the orientation change rate of the ground surface 101 relative to gravity $g$.

As discussed above in connection to Figure 2, 5 and 6, the method may comprise configuring S11 the ground speed radar system 201-206 with a plurality of radar transceivers 201-206 arranged directed at the ground surface 101, and also configuring S12 at least one radar transceiver with a respective and co-located IMU. It may be an advantage that some IMUs are co-located with a radar transceiver since this simplifies the translation between different reference frames. It may also be an advantage to integrate the IMU hardware together with the radar hardware into a single radar-IMU module which can be mounted on the vehicle and supplied by the same power interface and the same data communication interface.

The method may also comprise configuring S13 at least one radar transceiver of the ground speed radar system 201-206 with an antenna array 500, 600, as discussed above in connection to, e.g., Figure 5 and Figure 6. An advantage of using an antenna array to collect the radar data is that the antenna array allows for measuring radial velocities and also distances in more than one direction simultaneously or sequentially. The method preferably also comprises configuring S131 the at least one radar transceiver having an antenna array 500, 600 with a respective and co-located IMU. The combination of a radar transceiver with an antenna array and an IMU provides for a powerful motion estimation sensor capable of estimating vehicle motion on two or more reference systems at the same time, which is an advantage.

Some examples of the methods disclosed herein comprise determining S41 motion by the vehicle 100, 700 in the vehicle reference frame based on joint processing of the radar data $\dot{\theta}_r$,$V_r$ and the IMU data $\omega$,$a$, and/or determining S42 motion by the vehicle 100, 700 in an Inertial reference frame based on joint processing of the radar data $\dot{\theta}_r$,$V_r$ and the IMU data $\omega$,$a$, and/or determining S43 motion by the vehicle 100, 700 in the ground surface reference frame based on joint processing of the radar data $\dot{\theta}_r$,$V_r$ and the IMU data $\omega$,$a$.

The method may also comprise determining S44 motion by the vehicle 100, 700 based on joint processing of the radar data $\dot{\theta}_r$,$V_r$ and the IMU data $\omega$,$a$, and on a model of vehicle dynamics associated with the vehicle 100, 700. The joint processing of the radar data $\dot{\theta}_r$,$V_r$ and the IMU data $\omega$,$a$ optionally comprises processing by a Kalman filter, an extended Kalman filter, or a Particle filter, just to give a few examples.

There is also disclosed herein control system 160, 170, 800 for controlling motion of a vehicle 100, 700, where the vehicle 100, 700 comprises a ground speed radar system 201-206 arranged to measure motion of the vehicle 100, 700 relative to a ground surface 101 supporting the vehicle 100, 700 in a ground surface reference frame, and an inertial measurement unit, IMU, system 210 arranged to measure motion of the vehicle 100, 700 in a vehicle reference frame, the control system 160, 170, 800 comprising processing circuitry 1002 configured to: obtain S2 radar data $\dot{\theta}_r$,$V_r$ from the radar system and IMU data $\omega$,$a$ from the IMU system, determine S3 motion by the vehicle 100, 700 in the ground surface 101 reference frame based on the radar data $\dot{\theta}_r$,$V_r$, determine S4 motion by the vehicle 100, 700 in the vehicle reference frame based on the IMU data $\omega$,$a$, identify S5 an orientation of the ground surface 101 relative to a horizontal plane, based on joint processing of the radar data $\dot{\theta}_r$,$V_r$ and on the IMU data $\omega$,$a$, and control S7 the motion of the vehicle 100, 700 based at least in part on the orientation of the ground surface 101 relative to gravity $g$.

As already mentioned, it may be desirable to estimate one or more of: an orientation of a vehicle relative to a horizontal plane (i.e., relative an inertial reference frame), an orientation of a vehicle relative an external surface (e.g., the ground surface), and an orientation of the ground surface relative to a horizontal plane (i.e., relative an inertial reference frame). Measurement data from IMU(s) and ground-facing radar transceiver(s) may be utilized for this purpose.

In some examples, a sensor device (suitable for mounting in/on a vehicle) comprising an IMU and an advanced antenna radar transceiver fixedly mounted relative each other may be particularly suitable for such orientation estimation. According to such examples, the IMU and the advanced antenna radar transceiver are co-located (i.e., both are located within the sensor device, entailing that they are at a relatively small distance from each other).

That the IMU and the advanced antenna radar transceiver are fixedly mounted relative each other means that one cannot move (in location and/or orientation) without a corresponding movement occurring for the other. Thus, any movement of the advanced antenna array radar transceiver may be seen to cause a corresponding movement of the IMU, and vice versa.

For example, the IMU and the advanced antenna radar transceiver may be fixedly mounted relative each other by being comprised in a same (single) physical device (e.g., a sensor device unit). Alternatively or additionally, the IMU and the advanced antenna radar transceiver may be fixedly mounted relative each other by being fixedly mounted on a same (single) rigid structure.

When the IMU and the advanced antenna radar transceiver are fixedly mounted relative each other, they are associated with a common reference frame (i.e., the reference frame of the sensor device). This makes joint processing of the measurement data very convenient, since no translation is needed between different reference frames of the IMU and the advanced antenna radar transceiver to join the IMU data and the radar data, nor will there be any errors resulting from uncertainties about the relation between such different reference frames (e.g., due to unknown, or dynamic, relation between their respective locations and orientations).

By mounting the sensor device in/on a vehicle, the reference frame of the sensor device becomes related to a reference frame of the vehicle, wherein the relation is defined by the location and orientation of the mounting. Thus, an orientation of the sensor device relative a reference frame (e.g., the inertial reference frame) indicates an orientation of the vehicle relative the same reference frame.

When the IMU and the advanced antenna radar transceiver are comprised in a same (single) physical device, the measurements are collected at a single location and by a single sensor device unit. This typically entails one or more advantage(s), such as relatively low cost, relatively simple installation, relatively high efficiency of space utilization, relatively high flexibility, etc.

Figure 10A is a schematically illustrates a sensor device 100A according to some examples.

The sensor device 100A comprises an advanced antenna array radar transceiver (RAD) 120A and an inertial measurement unit (IMU) 110A.

The advanced antenna array radar transceiver 120A is configured to measure motion of the sensor device relative to an external surface (e.g., a ground surface supporting a vehicle in/on which the sensor device is mounted) in a reference frame of the sensor device and provide corresponding radar data. For example, the advanced antenna array radar transceiver 120A may be a single multi-beam Doppler radar transceiver as exemplified herein (compare, for example, with Figures 6, 14, 16-18). The advanced antenna array may be configured to illuminate different parts (locations) of the external surface (e.g., by using two, three, or more, differently directed radar beams) to measure radial velocity and distance to the external surface in several different azimuth and elevation angles relative the external surface. The beams are preferably configured to obtain measurement data indicative of speed in 3 directions ($v_x$, $v_y$, $v_z$) by using radial speed difference between the vehicle and the external surface.

In some examples, the advanced antenna array radar transceiver 120A is configured to measure velocity relative to ground $\dot{v}_x$, $v_y$, $v_z$ and the derivatives $\dot{v}_y$, $\dot{v}_y$, $\dot{v}_z$ (i.e., acceleration). In particular examples, the radar data comprises at least a longitudinal speed ($v_x$), a longitudinal acceleration ($\dot{v}_x$), and a lateral acceleration ($\dot{v}_y$). An assumption may be made regarding any non-provided parameter among $v_x$, $v_y$, $v_z$ and $\dot{v}_x$, $\dot{v}_y$, $\dot{v}_z$ (e.g., $v_y = v_z = \dot{v}_z = 0$).

The IMU 110A is configured to measure motion of the sensor device in a reference frame of the sensor device and provide corresponding IMU data. For example, the IMU 110A may be a 6-axis IMU (e.g., 3-axis accelerometer and 3-axis gyroscope). As already explained, the IMU data typically reflects a combined effect of gravity and change of speed as experienced by the IMU. The IMU is preferably configured to obtain measurement data indicative of acceleration in 3 directions ($a_x$, $a_y$, $a_z$) and angular speeds in 3 directions ($\omega_x$, $\omega_y$, $\omega_z$) in the sensor device frame (e.g., in the vehicle-fixed frame with the inertial frame as reference).

In some examples, the IMU 110A is configured to measure acceleration $a_x$, $a_y$, $a_z$ and angular speed $\omega_x$, $\omega_y$, $\omega_z$. In particular examples, the IMU data comprises at least a longitudinal acceleration ($a_x$), a lateral acceleration ($a_y$), and a yaw angular speed ($\omega_z$). An assumption may be made regarding any non-provided parameter among $a_x$, $a_y$, $a_z$ and $\omega_x$, $\omega_y$, $\omega_z$ (e.g., $a_z = \omega_x = \omega_y = 0$).

The sensor device 100A also comprises processing circuitry (PROC) 130A configured to determine an orientation of the sensor device 100A relative an inertial reference frame based on joint processing of the radar data and the IMU data. According to some examples, parameters of the orientation of the sensor device relative the inertial reference frame comprises one or more Euler angle(s) ($\theta_x$, $\theta_y$, $\theta_z$). The Euler angles represent the rotations (roll, pitch, yaw) for translation between the inertial reference frame and the reference frame of the sensor device.

Typically, but not necessarily, the processing circuitry 130A may be fixedly mounted relative - and/or co-located with - the IMU 110A and the advanced antenna array radar transceiver 120A. In some examples, the processing circuitry 130A is comprised in a same (single) physical device as the IMU 110A and the advanced antenna array radar transceiver 120A. Alternatively, the processing circuitry 130A may be implemented by general-purpose processing circuitry of the vehicle (e.g., a VCU, or similar).

The sensor device 100A may further comprise an interface (IF; e.g., a physical interface) 140A, through which one or more external devices can communicate with the sensor device 100A (i.e., receive outputs from the senor device 100A and/or provide input to the sensor device 100A).

The processing circuitry 130A may be operatively connected to the interface 140A, and may be configured to provide an indication of the orientation of the sensor device 100A relative the inertial reference frame to the interface 140A.

The advanced antenna array radar transceiver 120A may be operatively connected to the interface 140A, and may be configured to provide an indication of the radar data to the interface 140A. Alternatively, an indication of the radar data may be provided to the interface 140A via the processing circuitry 130A.

The IMU 110A may be operatively connected to the interface 140A, and may be configured to provide an indication of the IMU data to the interface 140A. Alternatively, an indication of the IMU data may be provided to the interface 140A via the processing circuitry 130A.

The output of the sensor device may be used for any suitable purpose (e.g., vehicle motion management). Particularly, the Euler angles, and/or information derived therefrom, may be suitable for stability control (e.g., excessive Euler roll angle is an indicator for a roll over event), normal tyre force estimation (e.g., Euler pitch and roll angles influence wheel loads), and lateral control (e.g., feedforward steering angle request when a bank angle is present to proactively depress road disturbance).

According to some examples, an output of the sensor device 100A comprises a data stream of Euler angle(s) (e.g., one or more of $\theta_x$, $\theta_y$, $\theta_z$, preferably including at least one of $\theta_x$ and $\theta_y$), acceleration(s) (e.g., one or more of $\dot{v}_x$, $\dot{v}_y$, $\dot{v}_z$, $a_x$, $a_y$, $a_z$), and velocity(-ies) (e.g., one or more of $v_x$, $v_y$, $v_z$, $\omega_x$, $\omega_y$, $\omega_z$).

Generally, the processing circuitry 130A may determine the orientation of the sensor device 100A relative an inertial reference frame in any suitable way based on joint processing of the radar data and the IMU data.

According to some examples, the processing circuitry 130A may be configured to determine the orientation of the sensor device based on an underdetermined system of equations, wherein the system of equations defines a relationship among parameters of the orientation, the IMU data, the radar data, and inertial gravity.

As already mentioned, a relationship among Euler angles, radar data, IMU data, and gravity $g$ may be expressed by:

$$\begin{bmatrix} a_x \\ a_y \\ a_z \end{bmatrix} = \begin{bmatrix} \dot{v}_x \\ \dot{v}_y \\ \dot{v}_z \end{bmatrix} + \begin{bmatrix} \omega_y v_z - \omega_z v_y \\ \omega_z v_x - \omega_x v_z \\ \omega_x v_y - \omega_y v_x \end{bmatrix} + g \cdot \begin{bmatrix} -\sin(\theta_y) \\ \sin(\theta_x)\cos(\theta_y) \\ \cos(\theta_x)\cos(\theta_y) \end{bmatrix}$$

which may be reformulated as:

$$\begin{bmatrix} -\sin(\theta_y) \\ \sin(\theta_x)\cos(\theta_y) \\ \cos(\theta_x)\cos(\theta_y) \end{bmatrix} = \frac{1}{g} \cdot \left( \begin{bmatrix} a_x \\ a_y \\ a_z \end{bmatrix} - \begin{bmatrix} \dot{v}_x \\ \dot{v}_y \\ \dot{v}_z \end{bmatrix} - \begin{bmatrix} \omega_y v_z - \omega_z v_y \\ \omega_z v_x - \omega_x v_z \\ \omega_x v_y - \omega_y v_x \end{bmatrix} \right)$$

This is an underdetermined system of equations from which $\theta_x$ and $\theta_y$ may be determined based on the IMU data and the radar data.

For example, the orientation of the sensor device may be determined as a least squares solution to the underdetermined system of equations.

Alternatively or additionally, the processing circuitry may be configured to dynamically assign a respective weight to each equation of the underdetermined system of equations (e.g., a weighted least squares solution).

According to some examples, the respective weight may be based on a reliability (or uncertainty) of measurement data used by the equation (e.g., assigning relatively high weight to equation(s) with relatively reliable measurement data and assigning relatively low weight to equation(s) with relatively unreliable measurement data). For example, if $\omega_z$ is considered relatively unreliable, a higher weight may be assigned to the last equation that to the first two equations. Alternatively, an assumption may be made regarding relatively unreliable measurement data (e.g., $\omega_z = 0$). The reliability may be estimated by any suitable approach (e.g., noise measurements).

Yet alternatively or additionally, the two top rows of the underdetermined system of equations may be approximated to:

$$\begin{bmatrix} \theta_y \\ \theta_x \end{bmatrix} = \frac{1}{g} \cdot \left( \begin{bmatrix} -a_x \\ a_y \end{bmatrix} - \begin{bmatrix} -\dot{v}_x \\ \dot{v}_y \end{bmatrix} - \begin{bmatrix} -\omega_y v_z + \omega_z v_y \\ \omega_z v_x - \omega_x v_z \end{bmatrix} \right)$$

which is especially suitable for small values of $\theta_x$ and $\theta_y$.

In some examples, the processing circuitry may be further configured to acquire an orientation of the sensor device relative the external surface (e.g., roll angle of chassi relative to the ground surface $\theta_{x,chassi}$ and/or pitch angle of chassi relative to the ground surface $\theta_{y,chassi}$), and to determine an orientation of the external surface relative the inertial reference frame (e.g., bank $\theta_{x,road}$ and/or slope $\theta_{y,road}$) based on the orientation of the sensor device relative the external surface and the orientation of the sensor device relative the inertial reference frame. One possible way to perform this determination is by application of:

$$\theta_x = \theta_{x,chassi} + \theta_{x,road}$$

$$\theta_y = \theta_{y,chassi} + \theta_{y,road}$$

which is particularly suitable for small values of the angles.

For example, the orientation of the sensor device relative the external surface may be acquired from some other sensor(s) mounted on/in the vehicle (e.g., measuring vertical distance from road to chassis at three or more points; for example, by suspension deflection sensors using potentiometers to measure the vertical distance). Alternatively, the orientation of the sensor device relative the external surface may be acquired by the advanced antenna array radar transceiver 120A.

Figure 10B illustrates a method 100B according to some examples. The method 100B is a computer-implemented method. For example, the method 100B may be performed by processing circuitry 130A of Figure 10A, or by other processing circuitry associated with an IMU and an advanced antenna radar transceiver which are fixedly mounted relative each other.

As illustrated by 110B, data is acquired of a sensor device comprising an advanced antenna array radar transceiver and an IMU (compare with 120A and 110A of Figure 10A). The acquired data comprises radar data indicating motion of the sensor device relative to an external surface in a reference frame of the sensor device and IMU data indicating motion of the sensor device in a reference frame of the sensor device.

As illustrated by 120B, an orientation of the sensor device relative an inertial reference frame is determined based on joint processing of the radar data and the IMU data subject to the advanced antenna array radar transceiver and the IMU being fixedly mounted relative each other (e.g., as elaborated on in relation to Figure 10A).

As illustrated by optional 130B, an orientation of the external surface relative the inertial reference frame may be determined based on the orientation of the sensor device relative the inertial reference frame and an orientation of the sensor device relative the external surface. The orientation of the sensor device relative the external surface may be acquired in any suitable way (e.g., as elaborated on in relation to Figure 10A).

As illustrated by optional 140B, the determined orientation(s) may be provided for vehicle control (e.g. , to a vehicle motion management function).

According to some various examples, approaches for robust radar-based vehicle motion estimation, and approaches for determining a signal quality metric associated with at least one radar transceiver of a vehicle, and approaches for detecting obstacles on a ground surface supporting a vehicle will be provided. These approaches may be combined, as suitable, with each other and/or with one or more other approaches exemplified herein.

Some examples relate to a computer implemented method for determining a motion parameter of a vehicle such as a heavy-duty vehicle or a passenger car. The method comprises configuring at least one radar transceiver to emit a respective radar signal towards a ground surface supporting the vehicle and receiving radar backscatter from the ground surface, where the radar backscatter is indicative of a radial velocity of the ground surface relative to the radar transceiver in dependence of a range from the radar transceiver to the ground surface. The method also comprises determining an expected range-Doppler appearance of the radar backscatter from the ground surface, such as a curve or pattern in a range-Doppler map or the like, based at least in part on an expected motion of the vehicle relative to the ground surface. The method further comprises obtaining a range-Doppler filter based on the expected range-Doppler appearance of the radar backscatter, processing the received radar backscatter by the range-Doppler filter, and determining the motion parameter of the vehicle based on the processed radar backscatter. This way a more robust ground-speed radar system is obtained, which is able to filter out clutter and distortion from objects different from the ground surface supporting the vehicle. The vehicle motion parameter determined based on the processed radar backscatter becomes both more reliable and more accurate.

Some examples of the method also comprises controlling motion of the vehicle based on the determined motion parameter. This way various vehicle motion management functions become more reliable, leading to more efficient and safe motion control. According to examples, the method comprises determining the motion parameter as a parameter comprising any of vehicle unit speed, vehicle unit acceleration, vehicle unit pitch angle, vehicle unit roll angle, vehicle unit pitch motion, vehicle unit roll motion, vehicle unit yaw motion, and vehicle unit heave over the ground surface.

The vehicle can be an articulated vehicle, in which case the method may comprise determining the motion parameter separately for two or more vehicle units. It may, for instance, be advantageous to obtained motion parameters separately for the truck and for the trailer of a semi-trailer vehicle combination. The separate vehicle unit motion parameters can be used to improve the vehicle motion control of the combination.

Some examples of the methods disclosed herein may comprise determining the expected range-Doppler appearance of the radar backscatter from the ground surface at least in part from a nominal radar transceiver geometry, such as a known installation geometry of the radar system, and/or a known vehicle geometry. This data can be preconfigured in a vehicle. The nominal radar transceiver geometry can then be refined during run-time, by various calibration methods that will be discussed in more detail below.

The methods discussed herein may furthermore comprise determining the expected range-Doppler appearance of the radar backscatter from the ground surface at least in part from a predicted motion of the vehicle. Motion prediction methods are known in the art and will not be discussed at length herein. Given a current estimated vehicle motion state, it is possible to extrapolate this to a future vehicle motion state using, e.g., information about control input signals such as applied steering angle, wheel torque, and so on. Using this type of predicted motion can improve the accuracy of the expected range-Doppler appearance. The predicted motion of the vehicle can, e.g., be determined at least in part based on an inertial measurement unit (IMU) output signal which provides acceleration data.

Some examples of the methods disclosed herein may comprise determining the expected range-Doppler appearance of the radar backscatter from the ground surface at least in part from a predicted vehicle unit pitch angle and/or a predicted vehicle unit roll angle of the vehicle. The pitch angle and the roll angle of the vehicle has an effect on the expected range-Doppler appearance of the radar backscatter, as will be explained in the following. Thus, it may be advisable to account for these parameters when determining the expected range-Doppler appearance. Some examples of the methods disclosed herein may also comprise determining the expected range-Doppler appearance of the radar backscatter from the ground surface at least in part from previous range-Doppler appearances of received radar backscatter, and/or at least in part from data received from one or more other vehicles.

According to some examples, the methods disclosed herein also comprise obtaining the range-Doppler filter as a set of discrete weights indexed by range and Doppler of the received radar backscatter and/or a weighting function over range and Doppler. These weights can then be applied to range-Doppler data obtained from a radar system in order to, e.g., suppress distortion and noise in the received backscatter which could otherwise have a negative effect on the accuracy of the motion parameter estimation by the system. According to some examples, the method comprises obtaining the range-Doppler filter as a boundary region which identifies a set of ranges and corresponding Doppler values to be used in determining the motion parameter of the vehicle. This boundary region can function as a gate which removes irrelevant portions of the range-Doppler domain from consideration when determining the motion parameter of the vehicle.

According to some examples, the method comprises obtaining the range-Doppler filter at least in part based on antenna characteristics of the at least one radar transceiver. By accounting for the antenna characteristics of the radar transceiver system, the accuracy and robustness of the overall system is improved, which is an advantage.

Some examples of the methods discussed herein may also comprise obtaining the range-Doppler filter at least in part based on an estimated error characteristic of the expected motion of the vehicle relative to the ground surface. This means that the filter is configured in dependence of how certain the estimate of vehicle motion is. A more certain motion then results in a narrower filter which suppresses more irrelevant data compared to when vehicle motion is less certain. It is an advantage to account for the estimated error characteristics of the expected motion of the vehicle relative to the ground surface in this manner since a more relevant filter is obtained which does not filter out important data, and at the same time suppresses unwanted distortion in the received radar backscatter.

Some examples of the methods discussed herein may also comprise determining a signal quality metric for each of the at least one radar transceiver based on an energy of the received radar backscatter after processing by the range-Doppler filter. This signal quality metric can be used in higher layer functions, such as vehicle motion control functions and the like, to optimize performance.

The method may also comprise detecting one or more obstacles on the ground surface supporting the vehicle, at least in part by a comparison of the received radar backscatter before and after processing by the range-Doppler filter. This way a robust obstacle detection system is provided, which is an advantage.

Some examples of the present disclosure also relate to hardware devices such as control units, computer systems, and processing circuitry. Vehicles are also disclosed that are associated with the above-mentioned technical features and advantages.

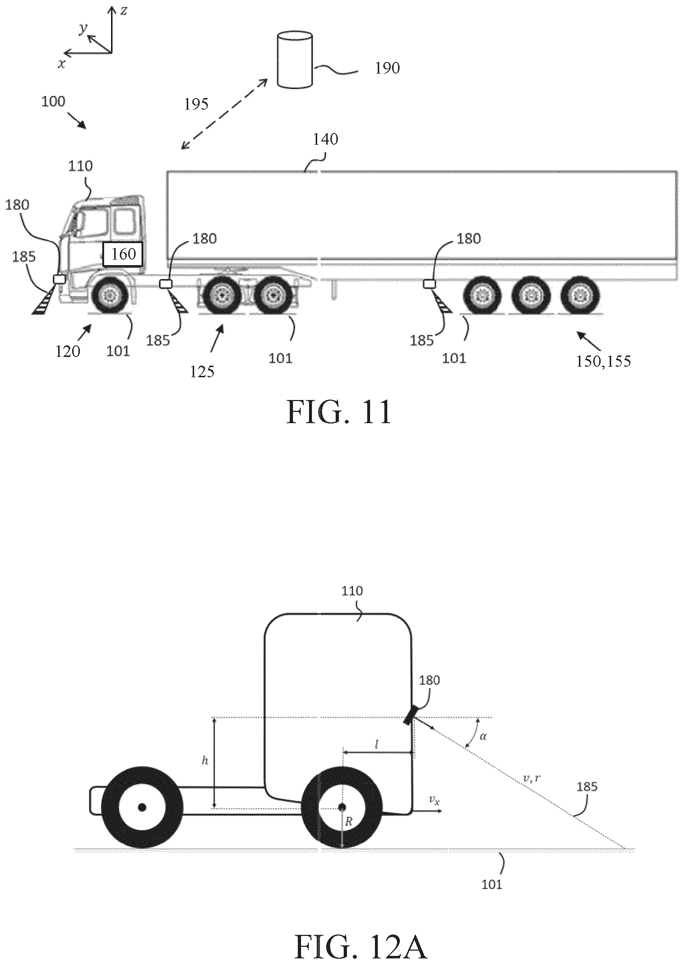

Figure 11 illustrates a heavy-duty vehicle 100 (compare with 100 of Figure 1). This particular example comprises a tractor unit 110 which is arranged to tow a trailer unit 140 in a known manner. The tractor 110 comprises a vehicle control unit (VCU) 160 arranged to control various functions of the vehicle 100. For instance, the VCU may be arranged to perform a vehicle motion management (VMM) function comprising control of wheel slip, vehicle unit stability, and so on. The trailer unit 140 optionally also comprises a VCU, which then controls one or more functions on the trailer 140. The VCU 160 on the tractor unit 110 may then be configured as primary unit and the VCU on the trailer may be at least in part controlled by the primary unit. The VCU or VCUs may be communicatively coupled, e.g., via wireless link 195, to a remote server 190. This remote server may be arranged to perform various VCU configurations, and to provide data to the VCU 160, such as data regarding the geometry of the vehicle and the characteristics of various sensor systems arranged on the tractor unit 110 and/or on the trailer 140.

The VCU or VCUs on the vehicle 100 comprise processing circuitry arranged to execute one or more functions. These functions will be described herein mainly as methods executed by processing circuitry on the VCU or VCUs. This processing circuitry may be centralized or distributed over more than one processing unit on the vehicle and/or at the remote server 190.

An example computer system 2200 that can be used to implement the methods discussed herein will be described in more detail below in connection to Figure 22.

A heavy-duty vehicle may be taken to mean a motor vehicle rated at more than 8,500 pounds Gross Vehicle Weight Rating (GVWR), which is about 3855 kg. A heavy-duty vehicle may also be taken to mean a motor vehicle that has a basic vehicle frontal area in excess of 45 square feet, which is about 4,2 m$^2$. Examples of heavy-duty vehicles include trucks, semitrailers, and the like. It is appreciated that the herein disclosed methods and control units can be applied with advantage also in other types of heavy-duty vehicles, such as trucks with drawbar connections, construction equipment, buses, and the like.

The vehicle combination 100 may of course also comprise additional vehicle units, such as one or more dolly units and more than one trailer unit. The teachings herein can also be applied in rigid vehicles, such as rigid trucks and also in passenger cars.

The vehicle 100 is supported by wheels. The tractor unit 110 has front wheels 120 which are normally steered, and rear wheels 125 of which at least one pair are driven wheels. The trailer unit 140 is supported on trailer wheels 150, 155. Trailers with driven wheels, and even one or more steered axles, are also possible. The wheels of the vehicle 100 support the vehicle on a surface 101, which can be a paved surface, a gravel surface, or some other surface.

The vehicle 100 is equipped with a radar sensor system comprising one or more radar transceivers 180 arranged to transmit respective radar signals 185 and to receive radar signal backscatter from the environment in vicinity of the radar transceiver, in particular from the surface 101 supporting the vehicle 100.

The radar sensor system transceivers 180 are directed at the surface 101 and can therefore be used to determine a speed over ground of the vehicle in a reliable manner. A ground speed radar module 180, 160 can be configured to determine a one dimensional velocity of the vehicle 100, such as the longitudinal velocity $v_x$ of the vehicle over the surface 101, a two-dimensional velocity vector $[v_x, v_y]$ or a three-dimensional velocity vector $[v_x, v_y, v_z]$ of a vehicle with respect to a surface supporting the vehicle, where the orientation of the x, y and z axes used in the present disclosure are indicated in Figure 11. The radar system on the vehicle can, generally, be used to determine one or more motion parameters of the vehicle such as vehicle unit speed ($v_x, v_y, v_z$), vehicle unit acceleration ($a_x, a_y, a_z$), vehicle unit pitch angle ($\varphi_y$), vehicle unit roll angle ($\varphi_x$), vehicle unit pitch motion ($\omega_y$), vehicle unit roll motion ($\omega_x$), and vehicle unit yaw motion ($\omega_z$). The radar system on the vehicle can also be used to determine vehicle unit heave, i.e., the vehicle unit height along the z-axis over the surface 101.

Many of the methods and functions discussed herein rely on data obtained from the one or more radar transceivers 180. The VCU or VCUs may be communicatively coupled to processing circuitry integrated with the radar transceivers 180. Some VCUs discussed herein may also comprise hardware for generating, transmitting and/or receiving radar signals. This disclosure is not limited to any particular VCU hardware architecture, nor any particular radar transceiver architecture.

The principle of determining motion parameters of the vehicle 100 using the radar transceivers 180 builds on the disclosure of, e.g., US 2004/0138802 and other known ground speed radar systems, such as the systems disclosed in WO2023169746 A1. Methods of varying complexity can be applied to determine vehicle motion parameters by analyzing radar backscatter from the surface supporting the vehicle. Such methods are known and will not be discussed in detail herein.

With reference to the somewhat simplified example in Figure 12A, suppose that the truck 110 moves in its longitudinal direction along the x-axis, and let $v_x$ denote the longitudinal velocity with respect to the surface 101 along this axis. Let *h* and *l* define the position of the radar sensor 180 with respect to the vehicle body of front axle, as indicated in Figure 12A. The wheel radius is denoted by *R*. The ground 101 moves at a radial velocity *v* relative to the radar transceiver 180. Radial velocity will often be referred to herein as the Doppler velocity, and the two terms can be used interchangeably.

The distance from the radar transceiver 180 to a point in the area on the surface illuminated by the radar transceiver is *r*. The radial velocity *v* and the range *r*, along an observation direction with an elevation angle $\alpha$ can be expressed as

$$v = -cos(\alpha) \, v_x \qquad (8)$$

$$r = \frac{1}{\sin(\alpha)} (h + R) \qquad (9)$$

The observation direction may, e.g., be the boresight direction of the radar transceiver, i.e., the direction of maximum antenna gain in a single main lobe radar transceiver, or some other direction. It is noted that both of these observations are functions of the elevation angle $\alpha$, which can be regarded as an implicit variable considering that simple radar systems, such as ground speed radars, having a single receiver antenna cannot directly measure the direction of arrival of the received radar backscatter.

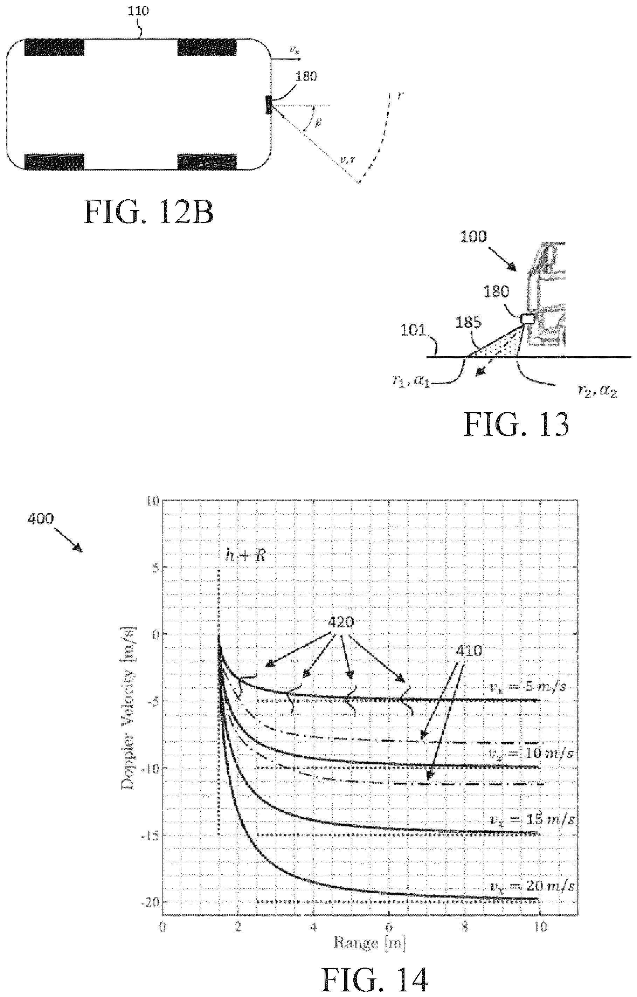

Figure 12B shows a top view of an example vehicle unit 110. In this case the radar beam is also angled laterally at an azimuth angle $\beta$ in addition to the elevation angle $\alpha$, while the range to the illuminated surface area is kept the same as indicated by the dashed line in Figure 12B. For an observation direction with an elevation angle $\alpha$ and an azimuth angle $\beta$, the range and radial velocities are given as

$$v = -cos(\alpha)\,cos(\beta)\,v_x \qquad\qquad (10)$$

$$r = \frac{1}{sin(\alpha)}(h + R) \qquad\qquad (11)$$

The radar transceiver 180 generally illuminates an area on the road surface and not a localized small point, since the radar beam is normally not a true laser-like or pencil-shaped beam. Thus, even single-beam radar transceivers simultaneously collect radar backscatter from different observation directions due to the spread of the main radar transmission lobe, i.e., due to the shape of the main lobe of the radar transceiver antenna including effects of, e.g., the radar front end on the overall transmission pattern of the radar transceiver. The extent of the spread depends mainly on the antenna characteristics of the radar transceiver but also the reflection properties of the environment and the vehicle components in the near-field of the radar transceiver. This means that there will be a spread in elevation angles in the transmitted radar signal, and also in the received radar backscatter, as illustrated in Figure 13, where an area of the road surface has been illuminated with varying degree of intensity, from some range $r_1$ at corresponding elevation angle $\alpha_1$ to a range $r_2$ at elevation angle $\alpha_2$. The bore sight direction of the radar transceiver 180 is indicated by the dashed line in Figure 13. The largest received radar backscatter power is most likely received from the boresight direction, at least on average. The average received signal power then declines with elevation angle from the elevation angle of the radar transceiver boresight direction in a known manner.

By letting $\alpha$ and/or $\beta$ vary over some predetermined span, such as between a small angle corresponding to a maximum range and an angle close to perpendicular to the surface 101, Doppler $v$ is obtained as function of range r, since each $\alpha$ and/or $\beta$ gives a tuple ($v,r$). The equations (8-11) can thus be used to determine an expected range-Doppler appearance of received radar backscatter from the surface 101, given an expected or predicted vehicle motion and a radar transceiver geometry.

In essence, this means that a range-Doppler map of the received radar backscatter, i.e., a data set indicating the different ranges and radial velocities at which radar backscatter energy has been detected by the radar transceiver 180, will exhibit a curved banana-like shape as illustrated by the example range-Doppler map 400 in Figure 14, where expected range-Doppler appearances of received radar backscatter has been plotted for different vehicle longitudinal velocities $v_x$. The parameters of the example radar system in Figure 14 are set as $h = 1.0\ m$, $R = 0.5\ m$, $l = 1\ m$, the range r is restricted to be smaller than 10 $m$. The radar is not able to observe the ground for the elevation angles $\alpha > \frac{\pi}{2}$ as the vehicle body obstructs the field of view. Note that the banana-like curves in Figure 14 all start at a range corresponding to the height of the radar transceiver over ground which corresponds to a direction more or less perpendicular to the ground, where radial (Doppler) velocity is close to zero as expected. The curves all converge to the longitudinal velocity of the vehicle 100, which happens as the azimuth angle (and thus also the distance r) becomes large, at least when $\alpha$ and $\beta$ are small.

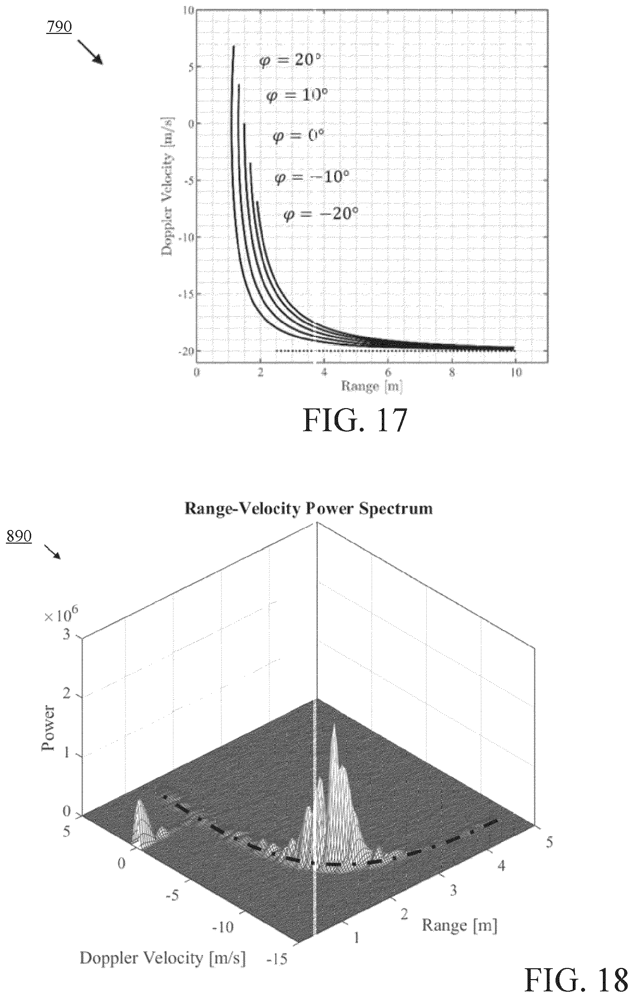

An example range-Doppler power spectrum 890 from a real-world radar transceiver is illustrated in Figure 18, where the expected range-Doppler appearance is indicated by a dash-dotted line. Here the impact from the antenna diagram can be more clearly seen as a variation in received radar backscatter power. The antenna boresight direction is in this case somewhere close to the peak of the power of the received backscatter. The artefact at zero range and zero Doppler is most likely due to near-field effects, i.e., objects close to the antenna. This power spectrum is likely to vary over time since it is impacted by the radar reflection properties of the surface and also at least to some extent by the radar transceiver front end.

To summarize, with continued reference to Figure 14, it has been realized that the characteristic behavior of ground surface radar backscatter as function of radar system geometry and vehicle motion can be leveraged in order to provide improved vehicle motion estimation, i.e., to improve the determination of one or more motion parameters on a vehicle, and also to determine or refine data related to radar system geometry on a vehicle, such as the height over ground of the radar transceiver, or its boresight angle relative to the surface supporting the vehicle. Having some idea of the current motion of a vehicle, such as its approximate longitudinal velocity, and the geometry of the radar system arranged on the vehicle, an expected range-Doppler appearance of the received backscatter from a given radar transceiver can be determined. This expected range-Doppler appearance can then be used to define a filter that can be applied to the received backscatter from the radar transceiver.

The expected range-Doppler appearance can be determined analytically, e.g., by varying $\alpha$ and $\beta$ in equation (10) and (11) above to get pairs of range and radial velocities which constitute the expected range-Doppler appearance. There are, however, also other ways to determine the expected range-Doppler appearance given a certain vehicle motion over the surface supporting the vehicle. One such method is an experimental method where the vehicle is moved over the surface at a known motion state (known velocity etc.) and the range-Doppler appearance is recorded a few times, averaged, and then stored in a database indexed by vehicle motion state. This database can then be consulted if an expected range-Doppler appearance for a given motion state is wanted.

An expected range-Doppler appearance can, according to the teachings herein, be formatted in different ways. According to one example the expected range-Doppler appearance is formatted as a curve in the range-Doppler plane, i.e., as a function $v = f(r)$. According to another example the expected range-Doppler appearance is a discrete set of magnitudes indexed by range $r$ and by velocity $v$, i.e., similar to a fast Fourier transform based discrete range-Doppler map obtained from a radar transceiver. According to yet another example the expected range-Doppler appearance is a continuous three-dimensional function which indicates expected power (possibly with phase) over range $r$ and velocity $v$.

The expected range-Doppler appearance can be used by the one or more VCUs 160 on the vehicle 100 to define one or more range-Doppler filters and signal processing functions that can be applied to the range-Doppler data obtained from the one or more radar transceivers 180. Suppose that the range-Doppler data set is indexed by range $r$ and by radial velocity $v$, such that $P_{r,d}$ is the received signal power in the radar backscatter corresponding to a range $r$ and a radial velocity $v$. The power $P_{r,d}$ may be just a magnitude or an amplitude with corresponding relative phase value.

Figure 14 illustrates a first example filter 410 applied to the $v_x = 10 m/s$ curve. This filter is a gating filter which will suppress all signal energy outside of the dash-dotted lines. This, interference from foreign objects on the road surface such as water spray, mud, snow, or obstacles on the road surface will be suppressed and thus not distort the estimation of vehicle speed over ground. The gating filter can, for instance, be defined as a region around the expected range-Doppler appearance defined by offsetting the expected range-Doppler appearance curve by a predetermined amount in the Doppler-direction.

Suppose for instance that $P_{r,d}$ is the received signal power in the radar backscatter corresponding to a range $r$ and a radial velocity $v$ in some radar system. The gating function will then zero out all received radar backscatter power if the coordinate in the range-Doppler map, i.e., $(v, r)$ lies outside of the gating region, leaving only the received radar backscatter power at coordinates in the range-Doppler map that lie inside of the gating region.

This type of gating filter can be used to pre-process that radar data obtained from the radar transceivers in, e.g., US 2004/0138802 A1 and/or in WO2023169746 A1, and also in the other ground-speed radar system known in the art.

Figure 14 also illustrates a second example filter 420. This filter is instead a weighting filter that applies larger weights to received radar backscatter power close to the expected appearance of the road surface, i.e., close to the banana-like curve, and smaller weights to received radar backscatter further away from the expected appearance. This will again emphasize radar backscatter that has likely resulted from reflection at the road surface and suppress of radar backscatter which may otherwise distort the estimation of vehicle motion relative to the road surface. The weights can, for instance, be determined function that declines in a direction perpendicular to the expected range-Doppler appearance curve. The decline may, e.g., be according to a second-order expression, a sine function, or an exponential decline. The decline in the weight function may also be linear.

Suppose again that $P_{r,d}$ is the received signal power in the radar backscatter corresponding to a range $r$ and a radial velocity $v$ in some radar system. The weighting function will then apply large magnitude weights to all received radar backscatter power at coordinates $(v,r)$ close (in Euclidean distance or by some other distance metric) to the expected range-Doppler appearance curve, and smaller weights to received radar backscatter power at coordinates $(v,r)$ further away from the expected range-Doppler appearance curve.

This type of weighting filter can be used to pre-process that radar data obtained from the radar transceivers in, e.g., US 2004/0138802 A1 and/or in WO2023169746 A1, and also in the other ground-speed radar system known in the art.

The expected range-Doppler appearance is, generally, a function $f_{G,M}(r,v)$ that is parameterized by the radar system geometry $G$ and the current vehicle motion $M$ (such as the position of the radar transceiver on the vehicle and the speed of the vehicle over the surface 101). Given a radar system geometry $G$ and a current vehicle motion $M$, it is possible to plot what the radar backscatter is expected to look like in the range-Doppler domain. The expected range-Doppler appearance function $f_{G,M}(r,v)$ can be given in magnitude only, or in amplitude and phase, just like any range-Doppler map.

According to a first example application, the expected range-Doppler appearance function $f_{G,M}(r,v)$ can be used to define a weighting function which emphasizes backscatter power $P_{r,d}$ where backscatter power is expected according to the function $f_{G,M}(r,v)$, while suppressing backscatter power at other parts in the range-Doppler map. In other words, received radar backscatter power at index $(r, d)$ from the radar transceiver 180 can be processed as

$$P_{r,d}{}^{proc} = w(r, d)P_{r,d}$$

where $w(r, d)$ is a weight determined from the magnitude of the function $f_{G,M}(r,v)$. In case the weights are binary (either zero or one), the filter will be a gating filter which rejects radar backscatter power too far from the expected range-Doppler appearance curve. The weights $w(r, d)$ are preferably also configured so as to account for uncertainty in the radar system geometry $G$ and/or in the current vehicle motion $M$. The more accurate the information on $G$ and $M$ the steeper the weights can decline from the most likely expected radar backscatter curve, and vice versa. In case of large uncertainty in the radar system geometry $G$ and/or in the current vehicle motion $M$ a set of uniform weights may be used, which will not result in any suppression of radar backscatter power in the range-Doppler map.

It is also possible to formulate an estimator $\hat{G}$ of radar system geometry $G$ and/or an estimator $\hat{M}$ of the current vehicle motion $M$ as, e.g.,

$$\hat{G} = arg\ min_{G|M}\ O\left(P_{r,v}, f_{G,M}(r,v)\right)$$

$$\hat{M} = arg\ min_{M|G}\ O\left(P_{r,v}, f_{G,M}(r,v)\right)$$

where $O(\cdot)$ is an objective function formulated based on the received radar signal backscatter power $P_{r,v}$ at different ranges $r$ and different radial velocities $v$ and the expected range-Doppler appearance function $f_{G,M}(r,v)$ that is parameterized by $G$ and/or by $M$. The notation $G|M$ means that the objective function is parameterized by $G$ conditioned on a known or assumed value of $M$. The objective function $O(\cdot)$ can be formulated using techniques known in the art, such as maximum likelihood objective functions, maximum a-posteriori objective functions, least-squares objective functions, and the like.

The estimators $\hat{G}$ and $\hat{M}$ are both constructed on the basic principle, which comprises observing radar backscatter from the surface 101 in the range-Doppler domain, and then finding the set of system parameters $G$ and/or $M$ which gives an expected range-Doppler appearance function $f_{G,M}(r,v)$ that best matches the observed radar backscatter.

As a straight-forward example of the above, suppose that the radar system geometry is perfectly known, i.e., that $G$ is known from accurate measurements and/or from calibration of the radar transceiver system installation, and that it is desired to determine one or more vehicle motion parameters comprised in $M$, such as vehicle speed. An objective function $O(P_{r,v}, f_{G,M}(r,v))$ can then be formulated based on some definition of distance between the detected radar backscatter power $P_{r,v}$ and the expected radar backscatter power for a given motion $M$. This objective function can then be minimized by finding the set of motion parameters $M$ that result in an expected range-Doppler appearance that agrees with the detected radar backscatter power $P_{r,v}$, according to some cost metric such as Euclidean distance, squared Euclidean distance, or the like. More advanced objective function may be formulated by assuming a statistical distribution of the different error sources involved in the process.

According to another straight-forward example, a set of functions similar to basis functions can be defined by assuming different vehicle motion parameters in some range, and with some resolution. The different motion parameter assumptions can be used together with an estimated or a-priori known radar system geometry $G$ to define expected range-Doppler appearance functions $f_{G,M_i}(r, v)$, $i = 1, 2,..., N$. A detected radar backscatter power $P_{r,v}$ can then be correlated with the different expected range-Doppler appearance functions $f_{G,M_i}(r, v)$, and the case with strongest correlation can be identified.

The assumption of zero pitch angle can of course be dropped and the problem can instead be formulated for an arbitrary pitch angle as shown in Figures 5A-B. In this case, we can express the range and Doppler velocity measurements as

$$v = -\cos(\alpha + \varphi)\ v_x\ , \qquad\qquad (12)$$

$$r = \frac{1}{\sin(\alpha + \varphi)}\left(\cos(\varphi)\ h\ - \sin(\varphi)\ l + R\right), \qquad (13)$$

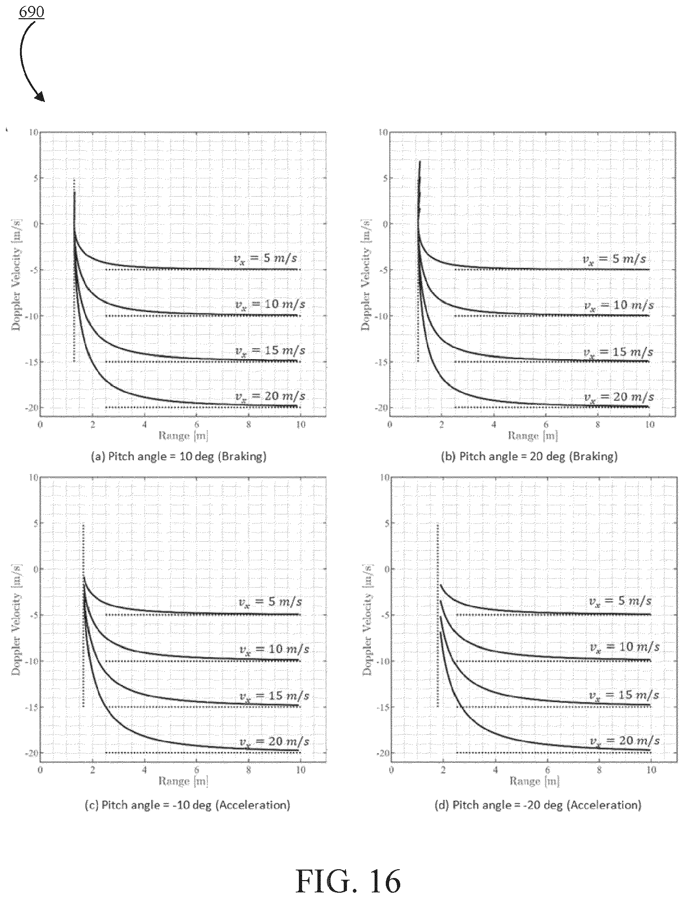

where $\varphi$ represents the pitch angle of the body with respect to the road surface. For the given setting, the range-velocity curves for some examples with various longitudinal velocities and pitch angles are illustrated in Figures 16A-D. Figure 17 compares the $v_x = 20m/s$ examples from Figures 16A-D.

It is appreciated that the techniques disclosed herein can be used to determine vehicle pitch. This can be realized, e.g., by investigating what the left-most part of the range-Doppler maps look like and estimate the current vehicle pitch as a pitch which gives an expected range-Doppler appearance that agrees with the detected radar backscatter power. A correlation between expected range-Doppler appearance and detected radar backscatter can be used to identify current vehicle pitch.

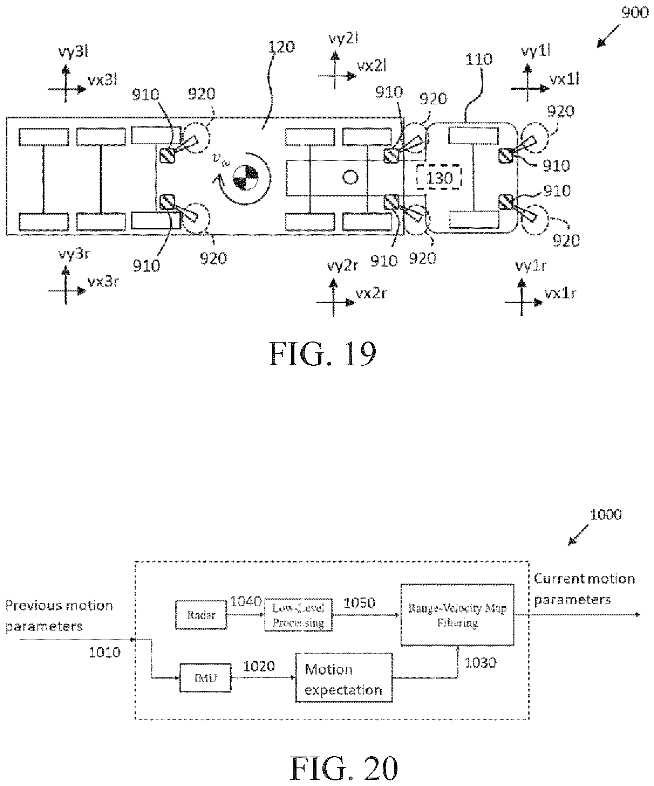

The techniques disclosed herein can be applied to vehicles comprising a single vehicle unit, and to vehicles comprising more than one vehicle unit, such as an articulated vehicle. The techniques can be applied in radar systems comprising just a single radar transceiver and in radar systems comprising a plurality of radar transceiver, perhaps mounted on different vehicle units as illustrated in Figure 19 which will be discussed in more detail.

To summarize, the present disclosure relates generally to computer-implemented methods and corresponding processing circuitry suitable for determining a motion parameter of a vehicle 100, 900. The motion parameter that is determined often comprises speed over ground $v_x$ of the vehicle, but other motion parameters can also be determined in this manner, as will be discussed in more detail in the following.

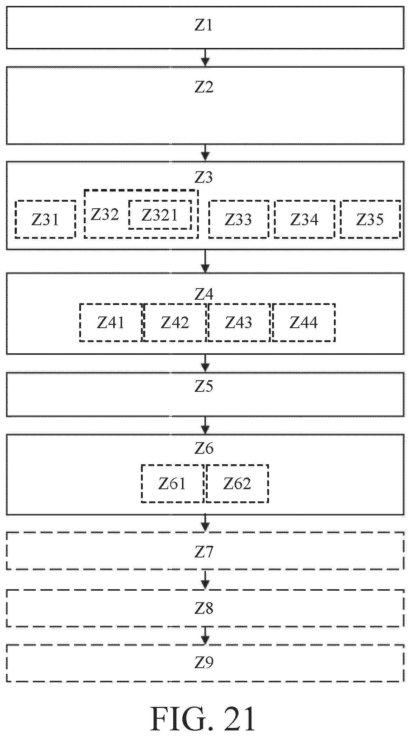

Figure 21 shows a flow chart that summarizes some of the teachings herein as methods. It is appreciated that the methods can be implemented in a computer system to be executed by processing circuitry, e.g., on a vehicle control unit 160. With reference to the flow chart in Figure 21, the methods disclosed herein comprise configuring Z1 at least one radar transceiver 180, 910 to emit a respective radar signal 185 towards a ground surface 101, 920 supporting the vehicle 100, 900. The ground surface may be a normal road surface, such as a paved surface, but can also be a gravel surface or mud surface at a construction site, or a less even forest road. The surface 101 does not have to be perfectly planar in order for the techniques disclosed herein to be effective.

The method comprises receiving Z2 radar backscatter from the ground surface 101, 920. The radar backscatter is as discussed above indicative of a radial velocity of the ground surface relative to the radar transceiver 180, 910. Since the radar transceiver illuminates an area of the ground surface, there will be a spectrum of ranges that are illuminated, normally with different intensity due to the antenna pattern of the radar transceiver. Due to the different illumination angles, a corresponding spectrum of radial velocities will be observed in the radar backscatter in dependence of the range from the radar transceiver 180, 910 to the ground surface 101, 920.

It is possible to determine Z3 an expected range-Doppler appearance 400, 690, 790, 890 of the radar backscatter from the ground surface 101, 920, based at least in part on an expected motion of the vehicle 100, 900 relative to the ground surface 101, 920. The expected range-Doppler appearance can for instance be predicted based, e.g., on the radar transceiver geometry as discussed above, and also using other techniques such as monitoring detected radar backscatter over time and comparing to estimated or known vehicle motion states. The expected range-Doppler appearance of the radar backscatter can be seen as a model of the radar backscatter which can be used to predict what the backscatter will look like.

The method also comprises obtaining Z4 a range-Doppler filter 410, 420 based on the expected range-Doppler appearance 400, 690, 790, 890 of the radar backscatter, which can be used to process Z5 the received radar backscatter in various ways as will be discussed in more detail below, such that the motion parameter of the vehicle can be determined Z6 in a better way.

The methods disclosed herein may target improved determination of motion parameters only. In this case the method may just result in an update of one or more motion parameters in memory that are then used by some other methods or control units to perform an action such as vehicle motion control. However, according to some examples the method also comprises controlling Z7 the actual motion of the vehicle 100, 900 based on the determined motion parameter. This motion control may, e.g., comprise control of the speed of the vehicle based on some desired speed, control of wheel slip using additional information related to the rotation speed of one or more wheels obtained from a wheel speed sensor, control of vehicle yaw rate, and the like.

Some of the computer-implemented methods disclosed herein comprise determining Z61 the motion parameter as a parameter comprising any of: vehicle unit speed $v_x$, $v_y$, $v_z$, vehicle unit acceleration $a_x$, $a_y$, $a_z$, vehicle unit pitch angle $\varphi_y$, vehicle unit roll angle $\varphi_x$, vehicle unit pitch motion $\omega_y$, vehicle unit roll motion $\omega_x$, and vehicle unit yaw motion $\omega_z$. These different motion parameters are important in many vehicle motion management functions, such as vehicle stability control.

The vehicle may be a single unit vehicle such as a passenger car or a rigid truck, or a multi-unit vehicle such as a rigid truck with a trailer or a semi-trailer vehicle. Figure 19 for instance shows an example heavy-duty vehicle 900 where a plurality of radar transceivers 910 have been mounted in connection to respective wheels or groups of wheels on the vehicle. On this example vehicle every group of wheels, i.e., front steered wheels, rear tractor wheels, and trailer wheels, are associated with radar transceivers on the right side and left side of the vehicle. Each such radar transceiver monitors the radar backscatter from an area of road surface 920 in front of the respective wheel or group of wheels, as illustrated in Figure 19.

In case of an articulated vehicle the method may comprise determining Z62 the motion parameter separately for two or more vehicle units. In this case several radar transceivers 910 can be arranged on the different vehicle units 110, 140 as illustrated in Figure 19, in order to illuminate different areas 920 of the ground surface 101. The VCU or VCUs can then jointly process the radar backscatter according to the techniques disclosed herein to determine the one or more vehicle motion parameters in a robust and accurate manner, which is less sensitive to disturbance from objects not forming a part of the surface supporting the vehicle.

The expected range-Doppler appearance 400, 690, 790, 890 of the radar backscatter from the ground surface 101, 920, i.e., the predicted shape of the banana-like curve, can be determined in a few different ways.

The most basic example of determining the expected range-Doppler appearance 400, 690, 790, 890 of the radar backscatter from the ground surface 101, 920 is to perhaps use the geometry of the radar transceiver installation on the vehicle, as exemplified above in connection to Figures 12A-B. This way a predicted speed of the vehicle can be translated into the expected range-Doppler appearance using mathematical relationships between illumination angle range and radial velocity. In other words, the methods disclosed herein may comprise determining Z31 the expected range-Doppler appearance 400, 690, 790, 890 of the radar backscatter from the ground surface 101, 920 at least in part from a nominal radar transceiver geometry. The speed of the vehicle 100 may, e.g., be given from a previous estimate of vehicle speed, perhaps with some extrapolation based on a current acceleration of the vehicle.

In some cases, the vehicle comprises one or more inertial measurement units (IMU). IMUs can be used with advantage to improve the processing of radar backscatter. Figure 20 shows an example 1000 of a radar signal processing system that is based on a combination of IMU and radar. The system uses a previous estimate of vehicle motion parameters as input 1010 to the IMU. The previous motion parameters may, e.g., comprise speed, acceleration, yaw motion, and the like. The IMU is then used to obtain information related to a current acceleration motion by the vehicle, and/or a current rotation motion by the vehicle. By formulating suitable motion equations, the previous motion parameters (such as the vehicle speed) can be combined with the data obtained from the IMU into an estimate of the expected motion by the vehicle relative to the surface 101.

The radar system, after low-level processing of measurement data 1040, outputs a data set 1050 corresponding to the range-Doppler maps discussed above. This data set is the processed using the expected motion 1030 of the vehicle according to the techniques disclosed herein. Thus, the methods disclosed herein may comprise determining Z32 the expected range-Doppler appearance 400, 690, 790, 890 of the radar backscatter from the ground surface 101, 920 at least in part from a predicted motion of the vehicle 100, 900, where the predicted motion of the vehicle can be determined Z321 at least in part based on an IMU output signal 1020.

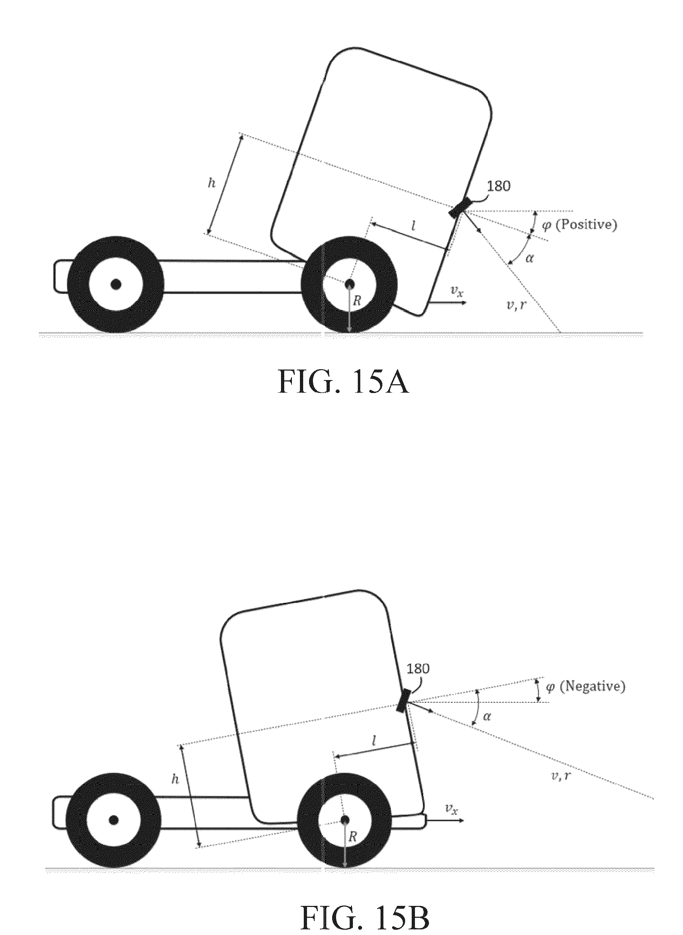

Some examples of the methods disclosed herein may also comprise determining Z33 the expected range-Doppler appearance 400, 690, 790, 890 of the radar backscatter from the ground surface 101, 920 at least in part from a predicted vehicle unit pitch angle $\varphi_y$ and/or a predicted vehicle unit roll angle $\varphi_x$ of the vehicle 100, 900, as was discussed above in connection to Figures 15A-B, and illustrated in the example graphs 690, 790.

There are also other ways to determine the expected range-Doppler appearance 400, 690, 790, 890 of the radar backscatter from the ground surface 101, 920. One such alternative way is to simply monitor the received backscatter and compare it to motion parameters values that have been determined using other systems. For instance, some vehicles comprise wheel speed sensors that can be used to determine vehicle longitudinal speed over ground in a reliable manner, as long as the wheel radius R is known and the wheels are not slipping. A free-rolling wheel (where no propulsion or braking torque is applied) can be used to determine vehicle longitudinal speed, and this speed can then be stored together with the range-Doppler appearance of the radar backscatter in a database. This database, once sufficiently populated, can then be consulted by the VCU in order to determine the expected range-Doppler appearance for a given vehicle velocity. Generally, improved performance of the techniques discussed herein can be obtained by determining Z34 the expected range-Doppler appearance 400, 690, 790, 890 of the radar backscatter from the ground surface 101, 920 at least in part from previous range-Doppler appearances of received radar backscatter. This method of determining the expected range-Doppler appearance can of course be combined with the analytical approach discussed above, or any other approach. The expected range-Doppler appearances determined in different ways can be merged together, possibly by accounting for reliability.

According to some examples, the method also comprises determining Z35 the expected range-Doppler appearance 400, 690, 790, 890 of the radar backscatter from the ground surface 101, 920 at least in part from data received from one or more other vehicles. Thus, it is appreciated that the expected appearance database can be shared between vehicles, and also at least in part be pre-stored in a memory module of the vehicle. The data related to expected range-Doppler appearance can, for instance, be shared using the wireless link 195 and the server 140 discussed above in connection to Figure 11.

The actual range-Doppler filter used as part of the method may also be obtained in various ways and may take on various forms.

According to one example, the method comprises obtaining Z41 the range-Doppler filter as a set of discrete weights 410 indexed by range and Doppler of the received radar backscatter and/or a weighting function over range and Doppler. These discrete weights or the weighting function, can be used to suppress radar backscatter that is more distant from the expected range-Doppler appearance, and emphasize the radar backscatter that is more in line with the expected range-Doppler appearance. This way distortion from objects not forming part of the ground surface 101 can be suppressed in an efficient manner.

According to another example, the method comprises obtaining Z42 the range-Doppler filter as a boundary region 420 which identifies a set of ranges and corresponding Doppler values to be used in determining the motion parameter of the vehicle 100, 900. The range-Doppler filter then functions as a gate, which discards any range-Doppler energy in the received radar backscatter which does not fall inside the gated region of interest.

The range-Doppler filter 410, 420 may also at least in part be obtained Z43 based on antenna characteristics of the at least one radar transceiver 180, 910. The antenna characteristics can be used to add more weight to radar backscatter in the region of the range-Doppler map that corresponds to the boresight direction of the radar transceiver, i.e., the part on the banana-like curve where the most signal energy is expected to be seen, and less weight on other parts of the range-Doppler map where not so much backscatter energy is expected.

According to other examples, the method comprises obtaining Z44 the range-Doppler filter 410, 420 at least in part based on an estimated error characteristic of the expected motion of the vehicle 100, 900 relative to the ground surface 101, 920. An error in the expected motion translates into an uncertainty in the expected range-Doppler appearance. An error in the speed of the vehicle over the surface 101 will, for instance, give rise to an error in the predicted convergence level, as can be seen from the example 400 in Figure 14. Likewise, an error in predicted vehicle pitch angle will result in an error in the left-most part of the banana-like curves as can be seen from the example 790 in Figure 17.

A variance or other measure of error characteristics in the motion state estimate of the vehicle that is used to determine the expected range-Doppler appearance can be used to define the range-Doppler filter, such that a larger estimated error characteristic of the expected motion of the vehicle 100, 900 relative to the ground surface 101, 920 results in a wider filter compared to a smaller estimated error characteristic of the expected motion of the vehicle 100, 900.

It is also appreciated that the techniques disclosed herein can be used to determine if strong or weak radar backscatter is received from the road surface. Strong radar backscatter from the road surface is normally indicative of better performance by the ground-speed radar system compared to less strong backscatter. In the extreme, one or more radar transceivers have been blocked by some objects, such that their view of the road surface is obstructed, in which case the radar backscatter will no longer carry information related to the motion of the vehicle relative to the surface 101. According to some examples, the method comprises determining Z8 a signal quality metric for each of the at least one radar transceiver based on an energy of the received radar backscatter after processing by the range-Doppler filter 410, 420. The signal quality metric can be used to indicate a reliability of the determined motion parameter to other functions in the vehicle motion management system of the vehicle.

The signal quality metric can, for instance, be used in a vehicle motion estimation system that comprises more than one sensor type. The system may, for instance, comprise both cameras, radars, lidars, and IMUs. By monitoring the signal quality metric determined in this manner using the range-Doppler filter, a sensor fusion system can apply a suitable weight to give the data from the ground-speed radar system more or less weight, in dependence of its current reliability.

The signal quality metric determined in this manner can also be used to trigger a situation avoidance maneuver (SAM), such as an emergency braking maneuver, in case the signal quality metric fails to satisfy a predetermined acceptance criterion. If this happens the radar system may not be reliable enough to perform vehicle motion control based on the data from the radar system, since the motion parameters determined based on the radar backscatter may be inaccurate.

The filter techniques disclosed herein can furthermore be used to detect objects for forming part of the road surface, such as obstacles on the road surface. One such example are vulnerable road users located close to the vehicle. These objects will give rise to radar signal energy that is distanced from the expected range-Doppler appearance, i.e., located at some other place than the banana-like curve in the range-Doppler map. Consequently, the methods disclosed herein may comprise detecting Z9 one or more obstacles on the ground surface 101, 920 supporting the vehicle 100, 900, at least in part by a comparison of the received radar backscatter before and after processing by the range-Doppler filter 410, 420.

In essence, object detection can be performed by analyzing parts of the range-Doppler map that are separated from the expected range-Doppler appearance, since these regions are not associated with the surface supporting the vehicle. In case the radar backscatter indicates significant energy somewhere in the range-Doppler map which is not close to the expected range-Doppler appearance, then this energy may be due to an obstacle on the surface, or in the air above the surface. The relative speed and range to this object can then be determined and, e.g., reported to an obstacle avoidance function of the vehicle. An alarm signal or emergency brake operation can also be triggered in the event that an obstacle is detected in this manner.

Figure 22 is a schematic diagram of a computer system 2200 for implementing examples disclosed herein. The computer system 2200 is adapted to execute instructions from a computer-readable medium to perform these and/or any of the functions or processing described herein. The computer system 2200 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 2200 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 2200 may comprise at least one computing device or electronic device capable of including firmware, hardware, and/or executing software instructions to implement the functionality described herein. The computer system 2200 may include processing circuitry 2202 (e.g., processing circuitry including one or more processor devices or control units), a memory 2204, and a system bus 2206. The computer system 2200 may include at least one computing device having the processing circuitry 2202. The system bus 2206 provides an interface for system components including, but not limited to, the memory 2204 and the processing circuitry 2202. The processing circuitry 2202 may include any number of hardware components for conducting data or signal processing or for executing computer code stored in memory 2204. The processing circuitry 2202 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 2202 may further include computer executable code that controls operation of the programmable device.

The system bus 2206 may be any of several types of bus structures that may further interconnect to a memory bus (with or without a memory controller), a peripheral bus, and/or a local bus using any of a variety of bus architectures. The memory 2204 may be one or more devices for storing data and/or computer code for completing or facilitating methods described herein. The memory 2204 may include database components, object code components, script components, or other types of information structure for supporting the various activities herein. Any distributed or local memory device may be utilized with the systems and methods of this description. The memory 2204 may be communicably connected to the processing circuitry 2202 (e.g., via a circuit or any other wired, wireless, or network connection) and may include computer code for executing one or more processes described herein. The memory 2204 may include non-volatile memory 2208 (e.g., read-only memory (ROM), erasable programmable read-only memory (EPROM), electrically erasable programmable read-only memory (EEPROM), etc.), and volatile memory 2210 (e.g., random-access memory (RAM)), or any other medium which can be used to carry or store desired program code in the form of machine-executable instructions or data structures and which can be accessed by a computer or other machine with processing circuitry 2202. A basic input/output system (BIOS) 2212 may be stored in the non-volatile memory 2208 and can include the basic routines that help to transfer information between elements within the computer system 2200.

The computer system 2200 may further include or be coupled to a non-transitory computer-readable storage medium such as the storage device 2214, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 2214 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 2214 and/or in the volatile memory 2210, which may include an operating system 2216 and/or one or more program modules 2218. All or a portion of the examples disclosed herein may be implemented as a computer program 2220 stored on a transitory or non-transitory computer-usable or computer-readable storage medium (e.g., single medium or multiple media), such as the storage device 2214, which includes complex programming instructions (e.g., complex computer-readable program code) to cause the processing circuitry 2202 to carry out actions described herein. Thus, the computer-readable program code of the computer program 2220 can comprise software instructions for implementing the functionality of the examples described herein when executed by the processing circuitry 2202. In some examples, the storage device 2214 may be a computer program product (e.g., readable storage medium) storing the computer program 2220 thereon, where at least a portion of a computer program 2220 may be loadable (e.g., into a processor) for implementing the functionality of the examples described herein when executed by the processing circuitry 2202. The processing circuitry 2202 may serve as a controller or control system for the computer system 2200 that is to implement the functionality described herein.

The computer system 2200 may include an input device interface 2222 configured to receive input and selections to be communicated to the computer system 2200 when executing instructions, such as from a keyboard, mouse, touch-sensitive surface, etc. Such input devices may be connected to the processing circuitry 2202 through the input device interface 2222 coupled to the system bus 2206 but can be connected through other interfaces, such as a parallel port, an Institute of Electrical and Electronic Engineers (IEEE) 1394 serial port, a Universal Serial Bus (USB) port, an IR interface, and the like. The computer system 2200 may include an output device interface 2224 configured to forward output, such as to a display, a video display unit (e.g., a liquid crystal display (LCD) or a cathode ray tube (CRT)). The computer system 2200 may include a communications interface 2226 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU) or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). Figure 23 illustrates a computer program product 2300 exemplified as a non-transitory computer-readable medium in the form of a compact disc read-only memory (CD ROM) 2350. The computer-readable medium has stored thereon program code 2340 comprising instructions. The program code is loadable into processing circuitry (PROC; e.g., a data processing unit) 2320, which may, for example, be comprised in a control unit 2310. When loaded into the processing circuitry, the program code may be stored in a memory (MEM) 2330 associated with, or comprised in, the processing circuitry. According to some examples, the program code may, when loaded into, and run by, the processing circuitry, cause execution of method steps according to, for example, any of the methods described herein.

Figure 24 schematically illustrates, in terms of a number of functional units, the components of a control unit 2400 according to some examples. This control unit 2400 may be comprised in a vehicle; e.g., in the form of a VCU. Processing circuitry 2410 is provided using any combination of one or more of a suitable central processing unit CPU, multiprocessor, microcontroller, digital signal processor DSP, etc., capable of executing software instructions stored in a computer program product, e.g. in the form of a storage medium 2430. The processing circuitry 2410 may further be provided as at least one application specific integrated circuit ASIC, or field programmable gate array FPGA.

Particularly, the processing circuitry 2410 is configured to cause the control unit 2400 to perform a set of operations, or steps, such as any of the methods described herein.

For example, the storage medium 2430 may store the set of operations, and the processing circuitry 2410 may be configured to retrieve the set of operations from the storage medium 2430 to cause the control unit 2400 to perform the set of operations. The set of operations may be provided as a set of executable instructions. Thus, the processing circuitry 2410 is thereby arranged to execute methods as herein disclosed. In particular, there is disclosed a control unit 2400 for controlling a vehicle, the control unit comprising processing circuitry 2410, an interface 2420 coupled to the processing circuitry 2410, and a memory 2430 coupled to the processing circuitry 2410, wherein the memory comprises machine readable computer program instructions that, when executed by the processing circuitry, causes the control unit to perform the methods discussed herein.

The storage medium 2430 may also comprise persistent storage, which, for example, can be any single one or combination of magnetic memory, optical memory, solid state memory or even remotely mounted memory.

The control unit 2400 may further comprise an interface 2420 for communications with at least one external device. As such, the interface 2420 may comprise one or more transmitters and receivers, comprising analogue and digital components and a suitable number of ports for wireline or wireless communication.

The processing circuitry 2410 controls the general operation of the control unit 2400, e.g., by sending data and control signals to the interface 2420 and the storage medium 2430, by receiving data and reports from the interface 2420, and by retrieving data and instructions from the storage medium 2430. Other components, as well as the related functionality, of the control node are omitted in order not to obscure the concepts presented herein.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of protection being set forth in the following claims.

**Claims**

1. A sensor device (100A) comprising:

   an advanced antenna array radar transceiver (120A) configured to measure motion of the sensor device relative to an external surface in a reference frame of the sensor device and provide corresponding radar data;
   an inertial measurement unit, IMU, (110A) configured to measure motion of the sensor device in a reference frame of the sensor device and provide corresponding IMU data; and
   processing circuitry (130A) configured to determine an orientation of the sensor device relative to an inertial reference frame based on joint processing of the radar data and the IMU data, **characterised in that** the inertial reference frame has an xy-plane parallel to a horizontal plane and a z-axis aligned with a gravity vector, and **in that** the advanced antenna array radar transceiver and the IMU are associated with a common reference frame by being fixedly mounted relative to each other, wherein the common reference frame is the reference frame of the sensor device.

2. The sensor device of claim 1, wherein parameters of the orientation of the sensor device relative to the inertial reference frame comprises one or more Euler angle(s) $(\theta_x, \theta_y, \theta_z)$.

3. The sensor device of any of claims 1-2, wherein the IMU data comprises at least a longitudinal acceleration $(a_x)$, a lateral acceleration $(a_y)$, and a yaw angular speed $(\omega_z)$.

4. The sensor device of any of claims 1-3, wherein the advanced antenna array is configured to illuminate different parts of the external surface to measure radial velocity and distance to the external surface in several different azimuth and elevation angles relative to the external surface.

5. The sensor device of any of claims 1-4, wherein the radar data comprises at least a longitudinal speed $(v_x)$, a longitudinal acceleration $(\dot{v}_x)$, and a lateral acceleration $(\dot{v}_y)$.

6. The sensor device of any of claims 1-5, wherein the processing circuitry is configured to determine the orientation of the sensor device (100A) based on an underdetermined system of equations defining a relationship among Euler angles, the IMU data, the radar data, and gravity g, from which the roll angle $\theta_x$ and the pitch angle $\theta_y$ may be determined based on the IMU data and the radar data.

7. The sensor device of claim 6, wherein the processing circuitry is configured to determine the orientation of the sensor device (100A) as a least squares solution to the underdetermined system of equations.

8. The sensor device of any of claims 6-7, wherein the processing circuitry is configured to dynamically assign a respective weight to each equation of the underdetermined system of equations.

9. The sensor device of any of claims 1-8, wherein the processing circuitry is further configured to acquire an orientation of the sensor device relative to the external surface, and to determine an orientation of the external surface relative to the inertial reference frame based on the orientation of the sensor device relative to the external surface and the orientation of the sensor device relative to the inertial reference frame.

10. A computer system (2200) comprising processing circuitry configured to:

acquire data of a sensor device comprising an advanced antenna array radar transceiver and an inertial measurement unit, IMU, wherein the acquired data comprises radar data indicating motion of the sensor device relative to an external surface in a reference frame of the sensor device and IMU data indicating motion of the sensor device in a reference frame of the sensor device; and
determine an orientation of the sensor device relative to an inertial reference frame based on joint processing of the radar data and the IMU data subject to the advanced antenna array radar transceiver and the IMU being associated with a common reference frame by being fixedly mounted relative to each other, wherein the common reference frame is the reference frame of the sensor device, and wherein the inertial reference frame has an xy-plane parallel to a horizontal plane and a z-axis aligned with a gravity vector.

11. A vehicle (100) comprising the sensor device of any of claims 1-9 and/or the computer system of claim 10.

12. The vehicle of claim 11, wherein the external surface is a ground surface (101) supporting the vehicle, and wherein the orientation of the sensor device relative to the inertial reference frame indicates an orientation of the vehicle relative to the inertial reference frame.

13. A computer-implemented method (100B), comprising:

acquiring (110B), by processing circuitry of a computer system, data of a sensor device comprising an advanced antenna array radar transceiver and an inertial measurement unit, IMU, wherein the acquired data comprises radar data indicating motion of the sensor device relative to an external surface in a reference frame of the sensor device and IMU data indicating motion of the sensor device in a reference frame of the sensor device; and
determining (120B), by the processing circuitry, an orientation of the sensor device relative to an inertial reference frame based on joint processing of the radar data and the IMU data subject to the advanced antenna array radar transceiver and the IMU being associated with a common reference frame by being fixedly mounted relative to each other, wherein the common reference frame is the reference frame of the sensor device, and wherein the inertial reference frame has an xy-plane parallel to a horizontal plane and a z-axis aligned with a gravity vector.

14. A computer program product (2300) comprising program code for performing, when executed by a processing circuitry, the method of claim 13.

15. A non-transitory computer-readable storage medium (2350) comprising the computer program product of claim 14.

**Patentansprüche**

1. Sensoreinrichtung (100A), umfassend:

einen fortschrittlichen Antennengruppen-Radar-Sendeempfänger (120A), der konfiguriert ist, um die Bewegung der Sensoreinrichtung in Bezug auf eine äußere Oberfläche in einem Bezugsrahmen der Sensoreinrichtung zu messen und entsprechende Radardaten bereitzustellen;
eine Inertialmesseinheit, IMU, (110A), die konfiguriert ist, um eine Bewegung der Sensoreinrichtung in einem Bezugsrahmen der Sensoreinrichtung zu messen und entsprechende IMU-Daten bereitzustellen; und
eine Verarbeitungsschaltung (130A), die konfiguriert ist, um eine Ausrichtung der Sensoreinrichtung in Bezug auf einen Inertialbezugsrahmen basierend auf einem gemeinsamen Verarbeiten der Radardaten und der IMU-Daten zu bestimmen, **dadurch gekennzeichnet, dass**
wobei das Inertialbezugssystem eine xy-Ebene parallel zu einer horizontalen Ebene, und eine z-Achse, die mit einem Gravitationsvektor ausgerichtet ist, aufweist,
und dass
der fortschrittliche Antennengruppen-Radar-Sendeempfänger und die IMU mit einem gemeinsamen Bezugsrahmen assoziiert sind, indem sie in Bezug aufeinander fest montiert sind, wobei der gemeinsame Bezugsrahmen der Bezugsrahmen der Sensoreinrichtung ist.

2. Sensoreinrichtung nach Anspruch 1, wobei die Parameter der Ausrichtung der Sensoreinrichtung in Bezug auf das Inertialbezugssystem einen oder mehrere Euler-Winkel ($\theta_x$, $\theta_y$, $\theta_z$) umfassen.

3. Sensoreinrichtung nach einem der Ansprüche 1-2, wobei die IMU-Daten mindestens eine Längsbeschleunigung ($\alpha_x$), eine Querbeschleunigung ($\alpha_y$) *und* eine Gierwinkelgeschwindigkeit ($\omega_z$) umfassen.

4. Sensoreinrichtung nach einem der Ansprüche 1-3, wobei die fortschrittliche Antennengruppe konfiguriert ist, um verschiedene Teile der äußeren Oberfläche zu beleuchten, um eine Radialgeschwindigkeit und einen Abstand zu der äußeren Oberfläche in mehreren verschiedenen Azimut- und Höhenwinkeln in Bezug auf die äußere Oberfläche zu messen.

5. Sensoreinrichtung nach einem der Ansprüche 1-4, wobei die Radardaten mindestens eine Längsgeschwindigkeit ($v_x$), eine Längsbeschleunigung ($\dot{v}_x$) und eine Querbeschleunigung ($\dot{v}_y$) umfassen.

6. Sensoreinrichtung nach einem der Ansprüche 1-5, wobei die Verarbeitungsschaltung konfiguriert ist, um die Ausrichtung der Sensoreinrichtung (100A) basierend auf einem unterbestimmten Gleichungssystems zu bestimmen, das eine Beziehung zwischen Euler-Winkeln, den IMU-Daten, den Radardaten und Schwerkraft g definiert, woraus der Rollwinkel $\theta_x$ und der Nickwinkel $\theta_y$ basierend auf den IMU-Daten und den Radardaten bestimmt werden können.

7. Sensoreinrichtung nach Anspruch 6, wobei die Verarbeitungsschaltung konfiguriert ist, um die Ausrichtung der Sensoreinrichtung (100A) als eine Lösung der kleinsten Quadrate des unterbestimmten Gleichungssystems zu bestimmen.

8. Sensoreinrichtung nach einem der Ansprüche 6-7, wobei die Verarbeitungsschaltung konfiguriert ist, um jeder Gleichung des unterbestimmten Gleichungssystems dynamisch ein entsprechendes Gewicht zuzuweisen.

9. Sensoreinrichtung nach einem der Ansprüche 1-8, wobei die Verarbeitungsschaltung ferner konfiguriert ist, um eine Ausrichtung der Sensoreinrichtung in Bezug auf die äußere Oberfläche zu erfassen und eine Ausrichtung der äußeren Oberfläche in Bezug auf den Inertialbezugsrahmen basierend auf der Ausrichtung der Sensoreinrichtung in Bezug auf die äußere Oberfläche und der Ausrichtung der Sensoreinrichtung in Bezug auf den Inertialbezugsrahmen zu bestimmen.

10. Computersystem (2200), umfassend eine Verarbeitungsschaltung, die zu Folgendem konfiguriert ist: Erfassen von Daten einer Sensoreinrichtung, umfassend einen fortschrittlichen Antennengruppen-Radar-Sendeempfänger und eine Inertialmesseinheit, IMU, wobei die erfassten Daten Radardaten, die eine Bewegung der Sensoreinrichtung in Bezug auf eine äußere Oberfläche in einem Bezugsrahmen der Sensoreinrichtung angeben, und IMU-Daten, die eine Bewegung der Sensoreinrichtung in einem Bezugsrahmen der Sensoreinrichtung angeben, umfassen; und Bestimmen einer Ausrichtung der Sensoreinrichtung in Bezug auf einen Inertialbezugsrahmen basierend auf einem gemeinsamen Verarbeiten der Radardaten und der IMU-Daten, wobei der fortschrittliche Antennengruppen-Radar-Sendeempfänger und die IMU mit einem gemeinsamen Bezugsrahmen assoziiert sind, indem sie in Bezug aufeinander fest montiert sind, wobei der gemeinsame Bezugsrahmen der Bezugsrahmen der Sensoreinrichtung ist und wobei der Inertialbezugsrahmen eine zu einer horizontalen Ebene parallele xy-Ebene und eine mit einem Schwerkraftvektor ausgerichtete z-Achse aufweist.

11. Fahrzeug (100), umfassend die Sensoreinrichtung nach einem der Ansprüche 1-9 und/oder das Computersystem nach Anspruch 10.

12. Fahrzeug nach Anspruch 11, wobei die äußere Oberfläche eine Bodenfläche (101) ist, die das Fahrzeug trägt, und wobei die Ausrichtung der Sensoreinrichtung in Bezug auf den Inertialbezugsrahmen eine Ausrichtung des Fahrzeugs in Bezug auf den Inertialbezugsrahmen angibt.

13. Computerimplementiertes Verfahren (100B), umfassend:

Erfassen (110B), durch eine Verarbeitungsschaltung eines Computersystems, von Daten einer Sensoreinrichtung, umfassend einen fortschrittlichen Antennengruppen-Radar-Sendeempfänger und eine Inertialmesseinheit (IMU), wobei die erfassten Daten Radardaten, die eine Bewegung der Sensoreinrichtung in Bezug auf eine äußere Oberfläche in einem Bezugsrahmen der Sensoreinrichtung angeben, und IMU-Daten, die eine Bewegung der Sensoreinrichtung in einem Bezugsrahmen der Sensoreinrichtung angeben, umfassen; und Bestimmen (120B), durch die Verarbeitungsschaltung, einer Ausrichtung der Sensoreinrichtung in Bezug auf einen Inertialbezugsrahmen basierend auf einem gemeinsamen Verarbeiten der Radardaten und der IMU-Daten, wobei der fortschrittliche Antennengruppen-Radar-Sendeempfänger und die IMU mit einem gemeinsamen Bezugsrahmen assoziiert sind, indem sie in Bezug aufeinander fest montiert sind, wobei der gemeinsame Bezugsrahmen der Bezugsrahmen der Sensoreinrichtung ist und wobei der Inertialbezugsrahmen eine zu einer horizontalen Ebene parallele xy-Ebene und eine mit einem Schwerkraftvektor ausgerichtete z-Achse aufweist.

14. Computerprogrammprodukt (2300), umfassend Programmcode, um das Verfahren von Anspruch 13 durchzuführen, wenn er durch eine Verarbeitungsschaltung ausgeführt wird.

15. Nicht-transitorisches computerlesbares Speichermedium (2350), umfassend das Computerprogrammprodukt nach Anspruch 14.

**Revendications**

1. Dispositif capteur (100A) comprenant :

   un émetteur-récepteur radar à réseau d'antennes avancé (120A) configuré pour mesurer le mouvement du dispositif capteur par rapport à une surface externe dans un cadre de référence du dispositif capteur et fournir des données radar correspondantes ;
   une unité de mesure inertielle (IMU) (110A) configurée pour mesurer le mouvement du dispositif capteur dans un cadre de référence du dispositif capteur et fournir des données IMU correspondantes ; et
   un circuit de traitement (130A) configuré pour déterminer une orientation du dispositif capteur par rapport à un cadre de référence inertiel sur la base d'un traitement conjoint des données radar et des données IMU, **caractérisé en ce que**
   le cadre de référence inertiel a un plan xy parallèle à un plan
   horizontal et un axe z aligné sur un vecteur de gravité,
   et **en ce que**
   l'émetteur-récepteur radar à réseau d'antennes avancé et l'IMU sont associés à un cadre de référence commun en étant montés de manière fixe l'un par rapport à l'autre, dans lequel le cadre de référence commun est le cadre de référence du dispositif capteur.

2. Dispositif capteur selon la revendication 1, dans lequel les paramètres de l'orientation du dispositif capteur par rapport au cadre de référence inertiel comprennent un ou plusieurs angles d'Euler ($\theta_x$, $\theta_y$, $\theta_z$).

3. Dispositif capteur selon l'une quelconque des revendications 1 à 2, dans lequel les données IMU comprennent au moins une accélération longitudinale ($\alpha_x$), une accélération latérale ($\alpha_y$) *et* une vitesse angulaire de lacet ($\omega_z$).

4. Dispositif capteur selon l'une quelconque des revendications 1 à 3, dans lequel le réseau d'antennes avancé est configuré pour éclairer différentes parties de la surface externe afin de mesurer la vitesse radiale et la distance par rapport à la surface externe dans plusieurs angles d'azimut et d'élévation différents par rapport à la surface externe.

5. Dispositif capteur selon l'une quelconque des revendications 1 à 4, dans lequel les données radar comprennent au moins une vitesse longitudinale ($v_x$), une accélération longitudinale ($\dot{v}_x$) et une accélération latérale ($\dot{v}_y$).

6. Dispositif capteur selon l'une quelconque des revendications 1 à 5, dans lequel le circuit de traitement est configuré pour déterminer l'orientation du dispositif capteur (100A) sur la base d'un système d'équations sous-déterminé définissant une relation entre les angles d'Euler, les données IMU, les données radar et la gravité g, à partir desquelles l'angle de roulis $\theta_x$ et l'angle de tangage $\theta_y$ peuvent être déterminés sur la base des données IMU et des données radar.

7. Dispositif capteur selon la revendication 6, dans lequel le circuit de traitement est configuré pour déterminer l'orientation du dispositif capteur (100 A) en tant que solution des moindres carrés au système d'équations sous-déterminé.

8. Dispositif capteur selon l'une quelconque des revendications 6 à 7, dans lequel le circuit de traitement est configuré pour attribuer dynamiquement un poids respectif à chaque équation du système d'équations sous-déterminé.

9. Dispositif capteur selon l'une quelconque des revendications 1 à 8, dans lequel le circuit de traitement est en outre configuré pour acquérir une orientation du dispositif capteur par rapport à la surface externe et pour déterminer une orientation de la surface externe par rapport au cadre de référence inertiel sur la base de l'orientation du dispositif capteur par rapport à la surface externe et de l'orientation du dispositif capteur par rapport au cadre de référence inertiel.

10. Système informatique (2200) comprenant un circuit de traitement configuré pour :
acquérir des données d'un dispositif capteur comprenant un émetteur-récepteur radar à réseau d'antennes avancé et une unité de mesure inertielle (IMU), dans lequel les données acquises comprennent des données radar indiquant le mouvement du dispositif capteur par rapport à une surface externe dans un cadre de référence du dispositif capteur et des données IMU indiquant le mouvement du dispositif capteur dans un cadre de référence du dispositif capteur ; et déterminer une orientation du dispositif capteur par rapport à un cadre de référence inertiel sur la base du traitement conjoint des données radar et des données IMU, sous réserve que l'émetteur-récepteur radar à réseau d'antennes avancé et l'IMU soient associés à un cadre de référence commun en étant montés de manière fixe l'un par rapport à l'autre, dans lequel le cadre de référence commun est le cadre de référence du dispositif capteur, et dans lequel le cadre de référence inertiel a un plan xy parallèle à un plan horizontal et un axe z aligné sur un vecteur de gravité.

11. Véhicule (100) comprenant le dispositif capteur selon l'une quelconque des revendications 1 à 9 et/ou le système informatique selon la revendication 10.

12. Véhicule selon la revendication 11, dans lequel la surface externe est une surface du sol (101) supportant le véhicule, et dans lequel l'orientation du dispositif capteur par rapport au cadre de référence inertiel indique une orientation du véhicule par rapport au cadre de référence inertiel.

13. Procédé mis en œuvre par ordinateur (100B), comprenant :

l'acquisition (110B), par le circuit de traitement d'un système informatique, de données d'un dispositif capteur comprenant un émetteur-récepteur radar à réseau d'antennes avancé et une unité de mesure inertielle (IMU), dans lequel les données acquises comprennent des données radar indiquant le mouvement du dispositif capteur par rapport à une surface externe dans un cadre de référence du dispositif capteur et des données IMU indiquant le mouvement du dispositif capteur dans un cadre de référence du dispositif capteur ; et
la détermination (120B), par le circuit de traitement, d'une orientation du dispositif capteur par rapport à un cadre de référence inertiel sur la base du traitement conjoint des données radar et des données **IMU,** sous réserve que l'émetteur-récepteur radar à réseau d'antennes avancé et l'IMU soient associés à un cadre de référence commun en étant montés de manière fixe l'un par rapport à l'autre, dans lequel le cadre de référence commun est le cadre de référence du dispositif capteur, et dans lequel le cadre de référence inertiel a un plan xy parallèle à un plan horizontal et un axe z aligné sur un vecteur de gravité.

14. Produit de programme informatique (2300) comprenant un code de programme pour réaliser, lorsqu'il est exécuté par un circuit de traitement, le procédé selon la revendication 13.

15. Support de stockage non transitoire lisible par ordinateur (2350) comprenant le produit de programme informatique selon la revendication 14.

FIG. 1

FIG. 2

rear view

FIG. 3

vehicle

Vehicle reference frame

FIG. 4A

Inertial reference frame

# FIG. 4B

Ground surface reference frame

# FIG. 4C

38

FIG. 5

FIG. 6

FIG. 7

FIG. 8

S1

S11    S12

S13

S131

↓

S2

↓

S3

↓

S4

S41    S42

S43    S44

↓

S5

↓

S6

↓

S7

S71

FIG. 9

---

100A

110A
IMU

120A
RAD

130A
PROC

140A
IF

FIG. 10A

100B

110B
Acquire data from IMU and RADAR

↓

120B
Determine orientation of sensor device

↓

130B
Determine orientation of external surface

↓

140B
Provide for vehicle control

FIG. 10B

FIG. 11

FIG. 12A

FIG. 12B

FIG. 13

FIG. 14

FIG. 15A

FIG. 15B

690

(a) Pitch angle = 10 deg (Braking)

(b) Pitch angle = 20 deg (Braking)

(c) Pitch angle = -10 deg (Acceleration)

(d) Pitch angle = -20 deg (Acceleration)

FIG. 16

790

## FIG. 17

890

**Range-Velocity Power Spectrum**

## FIG. 18

FIG. 19

FIG. 20

FIG. 21

FIG. 22

FIG. 23

FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040138802 A1
- WO 2023169746 A1
- WO 2023169681 A1
- US 10386461 B1
- US 20040138802 A
- WO 2023169652 A1